# EUROPEAN PATENT APPLICATION

(11) **EP 4 590 023 A1**
(43) Date of publication of application: **23.07.2025**
(21) Application number: 23865333.1
(22) Date of filing: 01.09.2023
(51) Int. Cl.: H04W 36/08, H04W 36/04, H04W 72/231, H04W 76/20, H04W 80/02

(54) **TERMINAL DEVICE, METHOD, AND INTEGRATED CIRCUIT**

(30) Priority: 12.09.2022 JP 2022144347
(71) Applicant: Sharp Kabushiki Kaisha, Sakai City, Osaka 590-8522 (JP)
(72) Inventor: INOUE Kyosuke, Sakai City, Osaka 590-8522 (JP); YAMADA Shohei, Sakai City, Osaka 590-8522 (JP); TSUBOI Hidekazu, Sakai City, Osaka 590-8522 (JP); KAWANO Takuma, Sakai City, Osaka 590-8522 (JP)
(74) Representative: Müller-Boré & Partner Patentanwälte PartG mbB
(86) International application number: PCT/JP2023/032128
(87) International publication number: WO 2024/057978

(57) **Abstract**

A terminal apparatus for communicating with a base station apparatus includes an RRC processing unit. In a case that a serving cell change to a candidate cell is indicated by a lower layer (layer 1/layer 2) of a certain cell group, the RRC processing unit determines, based on a configuration of the candidate cell stored in the RRC processing unit, whether to reestablish an RLC entity in a case of the serving cell change. In a case of determining that the RLC entity is to be reestablished in a case of the serving cell change, the RRC processing unit reestablishes the RLC entity. In a case of determining that the RLC entity is not to be reestablished in a case of the serving cell change, the RRC processing unit does not reestablish the RLC entity.

## Description

### Technical Field

The present invention relates to a terminal apparatus, a method, and an integrated circuit.

The present application claims priority to Japanese Patent Application No. 2022-144347 filed in Japan on September 12, 2022, the contents of which are incorporated herein by reference.

### Background Art

In the 3rd Generation Partnership Project (3GPP) being a standardization project for cellular mobile communication systems, technical study and standardization are being carried out regarding cellular mobile communication systems including radio access, core networks, and services.

For example, technical study and standardization of Evolved Universal Terrestrial Radio Access (E-UTRA) have begun in the 3GPP as a Radio Access Technology (RAT) for cellular mobile communication systems for the 3.9th generation and the 4th generation. Technical study and standardization of enhanced technology of E-UTRA are still being carried out in the 3GPP. Note that E-UTRA may also be referred to as Long Term Evolution (LTE: trade name), and its enhanced technology may also be referred to as LTE-Advanced (LTE-A) and LTE-Advanced Pro (LTE-A Pro).

Technical study and standardization of New Radio or NR Radio access (NR) have begun in the 3GPP as a Radio Access Technology (RAT) for cellular mobile communication systems for the 5th Generation (5G). Technical study and standardization of enhanced technology of NR are still carried out in the 3GPP.

### Citation List

### Non Patent Literature

NPL 1: 3GPP TS 38.300 v16.4.0, "NR; NR and NG-RAN Overall description; Stage 2" pp. 10-134
NPL 2: 3GPP TS 36.300 v16.4.0, "Evolved Universal Terrestrial Radio Access (E-UTRA) and Evolved Universal Terrestrial Radio Access Network (E-UTRAN); Overall description; Stage 2" pp. 19-362
NPL 3: 3GPP TS 38.331 v16.3.1, "NR; Radio Resource Control (RRC); Protocol specifications" pp. 21-881
NPL 4: 3GPP TS 36.331 v16.3.0, "Evolved Universal Terrestrial Radio Access (E-UTRA); Radio Resource Control (RRC); Protocol specifications" pp. 25-1015
NPL 5: 3GPP TS 37.340 v16.4.0, "Evolved Universal Terrestrial Radio Access (E-UTRA) and NR; Multi-Connectivity; Stage 2" pp. 7-77
NPL 6: 3GPP TS 38.321 v16.3.0, "NR; Medium Access Control (MAC) protocol specification" pp. 8-152
NPL 7: 3GPP TS 38.331 v17.0.0, "NR; Radio Resource Control (RRC) Protocol specification"
NPL 8: 3GPP TS 38.321 v17.0.0, "NR; Medium Access Control (MAC) protocol specification"

### Summary of Invention

### Technical Problem

As an NR extension technique, there is a serving cell change technique for a terminal apparatus to move from a coverage area of a certain cell to a coverage area of another cell. This serving cell change is triggered by layer 3 (also referred to as RRC) measurement, and reconfiguration with synchronization for serving cell change is triggered by RRC signalling. Compared with RRC signalling, layer 1 or layer 2 signalling has the advantages of low delay and low overhead. Thus, a study of the serving cell change technique triggered by layer 1 or layer 2 signalling (layer 1/layer 2 mobility enhancement (L1/L2 mobility enhancement) technique) has been started.

NPL 7 is a specification of RRC before the study of the layer 1/layer 2 mobility optimization technique is started. However, in a case that the serving cell change is triggered by layer 1 or layer 2 signalling, there remains a problem that some processing causes unnecessary delay.

An aspect of the present invention is made in view of the circumstances described above, and has an object to provide a terminal apparatus, a base station apparatus, a communication method, and an integrated circuit that enable efficient communication control.

### Solution to Problem

In order to accomplish the object described above, an aspect of the present invention is contrived to provide the following means. Specifically, one aspect of the present invention is a terminal apparatus for communicating with a base station apparatus, the terminal apparatus including an RRC processing unit, wherein in a case that a serving cell change to a candidate cell is indicated by a lower layer (layer 1/layer 2) of a certain cell group, the RRC processing unit determines, based on a configuration of the candidate cell stored in the RRC processing unit, whether to reestablish an RLC entity in the serving cell change, and in a case of determining that the RLC entity is to be reestablished in the serving cell change, the RRC processing unit reestablishes the RLC entity, and in a case of determining that the RLC entity is not to be reestablished in the serving cell change, the RRC processing unit does not reestablish the RLC entity.

Another aspect of the present invention is a method for a terminal apparatus for communicating with a base station apparatus, the method including the steps of: in a case that serving cell change to a candidate cell is indicated by a lower layer (layer 1/layer 2) of a certain cell group, determining, by an RRC entity of the terminal apparatus, whether to reestablish an RLC entity in a case of the serving cell change, based on a configuration of the candidate cell stored in the RRC entity; in a case of determining that the RLC entity is to be reestablished in a case of the serving cell change, reestablishing, by the RRC entity, the RLC entity; and in a case of determining that the RLC entity is not to be reestablished in a case of the serving cell change, not reestablishing, by the RRC entity, the RLC entity.

An aspect of the present invention is an integrated circuit implemented in a terminal apparatus for communicating with a base station apparatus, the integrated circuit causing an RRC entity of the terminal apparatus to perform: in a case that a serving cell change to a candidate cell is indicated by a lower layer (layer 1/layer 2) of a certain cell group, determining, based on a configuration of the candidate cell stored in the RRC entity, whether to reestablish an RLC entity in a case of the serving cell change; in a case of determining that the RLC entity is to be reestablished in a case of the serving cell change, reestablishing the RLC entity; and in a case of determining that the RLC entity is not to be reestablished in a case of the serving cell change, not reestablishing the RLC entity.

These comprehensive or specific aspects may be implemented in a system, an apparatus, a method, an integrated circuit, a computer program, or a recording medium, or may be implemented in any combination of systems, apparatuses, methods, integrated circuits, computer programs, and recording media.

### Advantageous Effects of Invention

According to an aspect of the present invention, the terminal apparatus, the method, and the integrated circuit can implement efficient communication control processing.

### Brief Description of Drawings

FIG. 1 is a schematic diagram of a communication system according to the present embodiment.
FIG. 2 is a diagram of an example of an E-UTRA protocol architecture according to the present embodiment.
FIG. 3 is a diagram of an example of an NR protocol architecture according to the present embodiment.
FIG. 4 is a diagram illustrating an example of a flow of a procedure for various configurations in RRC according to the present embodiment.
FIG. 5 is a block diagram illustrating a configuration of a terminal apparatus according to the present embodiment.
FIG. 6 is a block diagram illustrating a configuration of a base station apparatus according to the present embodiment.
FIG. 7 is an example of an ASN.1 notation included in a message related to reconfiguration of RRC connection in NR according to the present embodiment.
FIG. 8 is an example of an ASN.1 notation included in a message related to reconfiguration of RRC connection in E-UTRA according to the present embodiment.
FIG. 9 is an example of ASN. 1 notation included in a serving cell common configuration according to the present embodiment.
FIG. 10 is an example of processing of the terminal apparatus according to the present embodiment.

### Description of Embodiments

The present embodiment will be described below in detail with reference to the drawings.

LTE (and LTE-A, LTE-A Pro) and NR may be defined as different Radio Access Technologies (RATs). NR may be defined as a technology included in LTE. LTE may be defined as a technology included in NR. LTE that is connectible to NR by using Multi-Radio Dual Connectivity (MR-DC) may be distinguished from existing LTE. LTE using a 5GC as a Core Network (CN) may be distinguished from existing LTE using an EPC as a core network. Note that existing LTE may refer to LTE in which a technology standardized in release 15 or later versions of 3GPP is not implemented. The present embodiment may be applied to the NR, the LTE and other RATs. Terms associated with the LTE and the NR are used in the following description. However, the present embodiment may be applied to other technologies using other terms. In the present embodiment, the term "E-UTRA" may be replaced with "LTE", and the term "LTE" may be replaced with "E-UTRA".

Note that, in the present embodiment, terms of each node and entity, processing in each node and entity, and the like in a case that the radio access technology is E-UTRA or NR will be described. However, the present embodiment may be used for another radio access technology. In the present embodiment, the terms of each node and entity may be other terms.

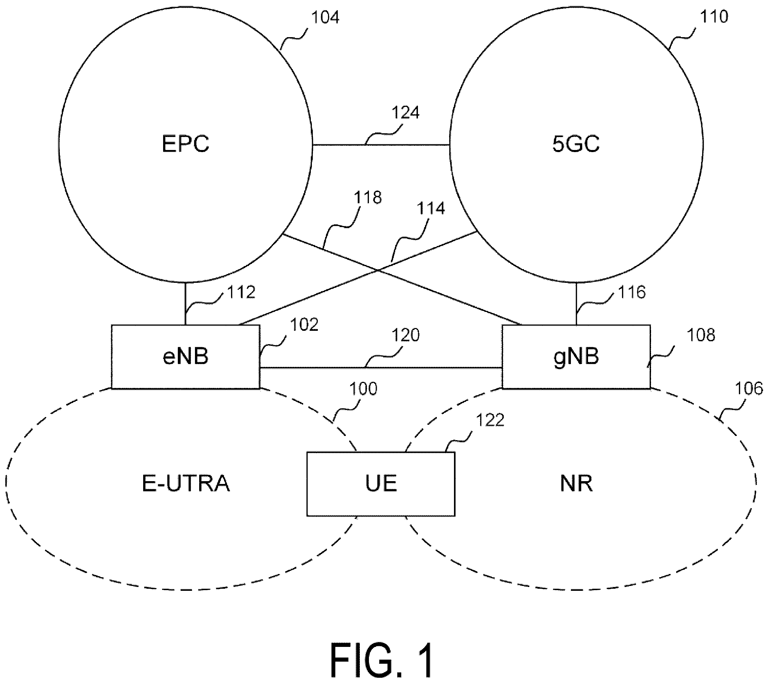

FIG. 1 is a schematic diagram of a communication system according to the present embodiment. Note that functions such as each node, radio access technology, core network, and interface to be described with reference to FIG. 1 are a part of functions closely related to the present embodiment, and other functions may be provided.

E-UTRA 100 may be a radio access technology. The E-UTRA 100 may be an air interface between a UE 122 and an eNB 102. The air interface between the UE 122 and the eNB 102 may be referred to as a Uu interface. The E-UTRAN Node B (eNB) 102 may be a base station apparatus of the E-UTRA 100. The eNB 102 may have an E-UTRA protocol to be described below. The E-UTRA protocol may include an E-UTRA User Plane (UP) protocol to be described below and an E-UTRA Control Plane (CP) protocol to be described below. The eNB 102 may terminate the E-UTRA User Plane (UP) protocol and the E-UTRA Control Plane (CP) protocol for the UE 122. A radio access network including the eNB may be referred to as an E-UTRAN.

An Evolved Packet Core (EPC) 104 may be a core network. An interface 112 is an interface between the eNB 102 and the EPC 104, and may be referred to as an S1 interface. The interface 112 may include a control plane interface through which a control signal passes and/or a user plane interface through which user data passes. The control plane interface of the interface 112 may be terminated in a Mobility Management Entity (MME) (not illustrated) in the EPC 104. The user plane interface of the interface 112 may be terminated in a serving gateway (S-GW) (not illustrated) in the EPC 104. The control plane interface of the interface 112 may be referred to as an S1-MME interface. The user plane interface of the interface 112 may be referred to as an S1-U interface.

Note that one or multiple eNBs 102 may be connected to the EPC 104 via the interface 112. Among the multiple eNBs 102 connected to the EPC 104, an interface may be present (not illustrated). The interface among the multiple eNBs 102 connected to the EPC 104 may be referred to as an X2 interface.

NR 106 may be a radio access technology. The NR 106 may be an air interface between the UE 122 and a gNB 108. The air interface between the UE 122 and the gNB 108 may be referred to as a Uu interface. The g Node B (gNB) 108 may be a base station apparatus of the NR 106. The gNB 108 may have an NR protocol to be described below. The NR protocol may include an NR User Plane (UP) protocol to be described below and an NR Control Plane (CP) protocol to be described below. The gNB 108 may terminate the NR User Plane (UP) protocol and the NR Control Plane (CP) protocol for the UE 122.

A 5GC 110 may be a core network. An interface 116 is an interface between the gNB 108 and the 5GC 110, and may be referred to as an NG interface. The interface 116 may include a control plane interface through which a control signal passes and/or a user plane interface through which user data passes. The control plane interface of the interface 116 may be terminated in an Access and mobility Management Function (AMF) (not illustrated) in the 5GC 110. The user plane interface of the interface 116 may be terminated in a User Plane Function (UPF) (not illustrated) in the 5GC 110. The control plane interface of the interface 116 may be referred to as an NG-C interface. The user plane interface of the interface 116 may be referred to as an NG-U interface.

Note that one or multiple gNBs 108 may be connected to the 5GC 110 via the interface 116. Among the multiple gNBs 108 connected to the 5GC 110, an interface may be present (not illustrated). The interface among the multiple gNBs 108 connected to the 5GC 110 may be referred to as an Xn interface.

The eNB 102 may have a function of connecting to the 5GC 110. The eNB 102 having the function of connecting to the 5GC 110 may be referred to as an ng-eNB. An interface 114 is an interface between the eNB 102 and the 5GC 110, and may be referred to as an NG interface. The interface 114 may include a control plane interface through which a control signal passes and/or a user plane interface through which user data passes. The control plane interface of the interface 114 may be terminated in an AMF in the 5GC 110. The user plane interface of the interface 114 may be terminated in a UPF in the 5GC 110. The control plane interface of the interface 114 may be referred to as an NG-C interface. The user plane interface of the interface 114 may be referred to as an NG-U interface. A radio access network including the ng-eNB or the gNB may be referred to as an NG-RAN. The NG-RAN, the E-UTRAN, or the like may be simply referred to as a network. The network may include an eNB, an ng-eNB, a gNB, and the like.

Note that one or multiple eNBs 102 may be connected to the 5GC 110 via the interface 114. Among the multiple eNBs 102 connected to the 5GC 110, an interface may be present (not illustrated). The interface among the multiple eNBs 102 connected to the 5GC 110 may be referred to as an Xn interface. The eNB 102 connected to the 5GC 110 and the gNB 108 connected to the 5GC 110 may be connected with an interface 120. The interface 120 between the eNB 102 connected to the 5GC 110 and the gNB 108 connected to the 5GC 110 may be referred to as an Xn interface.

The gNB 108 may have a function of connecting to the EPC 104. The gNB 108 having the function of connecting to the EPC 104 may be referred to as an en-gNB. An interface 118 is an interface between the gNB 108 and the EPC 104, and may be referred to as an S1 interface. The interface 118 may include a user plane interface through which user data passes. The user plane interface of the interface 118 may be terminated in an S-GW (not illustrated) in the EPC 104. The user plane interface of the interface 118 may be referred to as an S1-U interface. The eNB 102 connected to the EPC 104 and the gNB 108 connected to the EPC 104 may be connected with the interface 120. The interface 120 between the eNB 102 connected to the EPC 104 and the gNB 108 connected to the EPC 104 may be referred to as an X2 interface.

An interface 124 is an interface between the EPC 104 and the 5GC 110, and may be an interface that allows only the CP, only the UP, or both of the CP and the UP to pass therethrough. A part or all of the interfaces out of the interface 114, the interface 116, the interface 118, the interface 120, the interface 124, and the like may be absent depending on a communication system provided by a communication provider or the like.

The UE 122 may be a terminal apparatus that can receive system information and a paging message transmitted from the eNB 102 and/or the gNB 108. The UE 122 may be a terminal apparatus that can establish a radio connection to the eNB 102 and/or the gNB 108. The UE 122 may be a terminal apparatus that can simultaneously establish a radio connection to the eNB 102 and a radio connection to the gNB 108. The UE 122 may have the E-UTRA protocol and/or the NR protocol. Note that the radio connection may be Radio Resource Control (RRC) connection.

The UE 122 may be a terminal apparatus that can connect to the EPC 104 and/or the 5GC 110 via the eNB 102 and/or the gNB 108. In a case that a connection destination core network of the eNB 102 and/or the gNB 108 with which the UE 122 performs communication is the EPC 104, each Data Radio Bearer (DRB) described below and established between the UE 122 and the eNB 102 and/or the gNB 108 may further be uniquely associated with each Evolved Packet System (EPS) bearer passing through the EPC 104. Each EPS bearer may be identified with an EPS bearer identity (Identity or ID). The same QoS may be secured for data, such as an IP packet and an Ethernet (trade name) frame, which passes through the same EPS bearer.

In a case that the connection destination core network of the eNB 102 and/or the gNB 108 with which the UE 122 performs communication is the 5GC 110, each DRB established between the UE 122 and the eNB 102 and/or the gNB 108 may further be associated with one of Packet Data Unit (PDU) sessions established in the 5GC 110. Each PDU session may include one or multiple QoS flows. Each DRB may be associated with (mapped to) one or multiple QoS flows, or may be associated with none of the QoS flows. Each PDU session may be identified with a PDU session identity (Identity, or ID). Each QoS flow may be identified with a QoS flow identity (Identity, or ID). The QoS may be secured for data, such as an IP packet and an Ethernet frame, which passes through the same QoS flow.

The EPC 104 need not include the PDU session(s) and/or the QoS flow(s). The 5GC 110 may not include the EPS bearer(s). In a case that the UE 122 is connected to the EPC 104, the UE 122 may have information of the EPS bearer(s) but need not have information in the PDU session(s) and/or the QoS flow(s). In a case that the UE 122 is connected to the 5GC 110, the UE 122 may have information in the PDU session(s) and/or the QoS flow(s) but need not have information of the EPS bearer(s).

Note that, in the following description, the eNB 102 and/or the gNB 108 is also simply referred to as a base station apparatus, and the UE 122 is also simply referred to as a terminal apparatus or a UE.

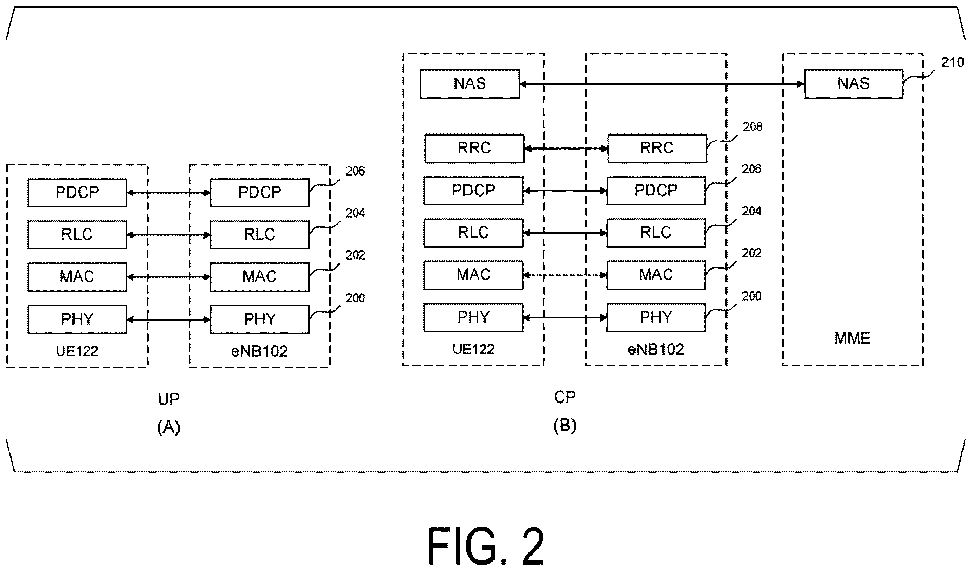

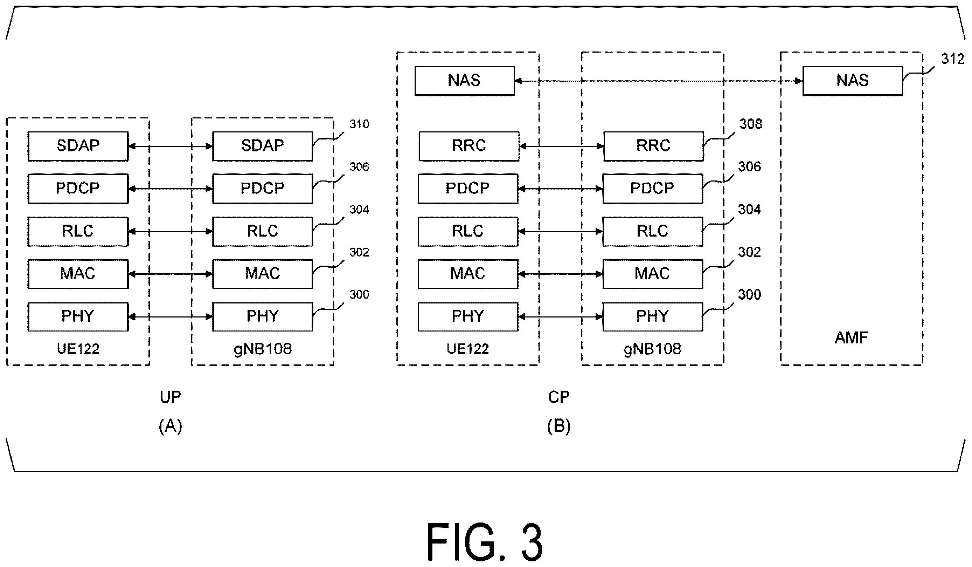

FIG. 2 is a diagram of an example of an E-UTRA protocol architecture according to the present embodiment. FIG. 3 is a diagram of an example of an NR protocol architecture according to the present embodiment. Note that functions of each protocol to be described with reference to FIG. 2 and/or FIG. 3 are a part of functions closely related to the present embodiment, and other functions may be provided. Note that, in the present embodiment, an uplink (UL) may be a link from the terminal apparatus to the base station apparatus. In the present embodiment, a downlink (DL) may be a link from the base station apparatus to the terminal apparatus.

FIG. 2(A) is a diagram of an E-UTRA user plane (UP) protocol stack. As illustrated in FIG. 2(A), the E-UTRA UP protocol may be a protocol between the UE 122 and the eNB 102. In other words, the E-UTRA UP protocol may be a protocol terminated in the eNB 102 in a network side. As illustrated in FIG. 2(A), the E-UTRA user plane protocol stack may include a Physical layer (PHY) 200 which is a radio physical layer, a Medium Access Control (MAC) 202 which is a medium access control layer, a Radio Link Control (RLC) 204 which is a radio link control layer, and a Packet Data Convergence Protocol (PDCP) 206 which is a packet data convergence protocol layer.

FIG. 3(A) is a diagram of an NR user plane (UP) protocol stack. As illustrated in FIG. 3(A), the NR UP protocol may be a protocol between the UE 122 and the gNB 108. In other words, the NR UP protocol may be a protocol terminated in the gNB 108 in a network side. As illustrated in FIG. 3(A), the NR user plane protocol stack may include a PHY 300 which is a radio physical layer, a MAC 302 which is a medium access control layer, an RLC 304 which is a radio link control layer, a PDCP 306 which is a packet data convergence protocol layer, and a Service Data Adaptation Protocol (SDAP) 310 which is a service data adaptation protocol layer.

FIG. 2(B) is a diagram of an E-UTRA control plane (CP) protocol architecture. As illustrated in FIG. 2(B), in the E-UTRA CP protocol, a Radio Resource Control (RRC) 208 being a radio resource control layer may be a protocol between the UE 122 and the eNB 102. In other words, the RRC 208 may be a protocol terminated in the eNB 102 in a network side. In the E-UTRA CP protocol, a Non Access Stratum (NAS) 210 being a non Access Stratum (AS) layer (non AS layer) may be a protocol between the UE 122 and the MME. In other words, the NAS 210 may be a protocol terminated in the MME in a network side.

FIG. 3(B) is a diagram of an NR control plane (CP) protocol architecture. As illustrated in FIG. 3(B), in the NR CP protocol, an RRC 308 being a radio resource control layer may be a protocol between the UE 122 and the gNB 108. In other words, the RRC 308 may be a protocol terminated in the gNB 108 in a network side. In the NR CP protocol, a NAS 312 being a non AS layer may be a protocol between the UE 122 and the AMF. In other words, the NAS 312 may be a protocol terminated in the AMF in a network side.

Note that the Access Stratum (AS) layer may be a layer terminated between the UE 122 and the eNB 102 and/or the gNB 108. In other words, the AS layer may be a layer including a part or all of the PHY 200, the MAC 202, the RLC 204, the PDCP 206, and the RRC 208, and/or a layer including a part or all of the PHY 300, the MAC 302, the RLC 304, the PDCP 306, the SDAP 310, and the RRC 308.

Note that, in the present embodiment, terms such as a PHY (PHY layer), a MAC (MAC layer), an RLC (RLC layer), a PDCP (PDCP layer), an RRC (RRC layer), and a NAS (NAS layer) may be hereinafter used, without the protocol of E-UTRA and the protocol of NR being distinguished from each other. In this case, the PHY (PHY layer), the MAC (MAC layer), the RLC (RLC layer), the PDCP (PDCP layer), the RRC (RRC layer), and the NAS (NAS layer) may be the PHY (PHY layer), the MAC (MAC layer), the RLC (RLC layer), the PDCP (PDCP layer), the RRC (RRC layer), and the NAS (NAS layer) of the E-UTRA protocol, or may be the PHY (PHY layer), the MAC (MAC layer), the RLC (RLC layer), the PDCP (PDCP layer), the RRC (RRC layer), and the NAS (NAS layer) of the NR protocol, respectively. The SDAP (SDAP layer) may be the SDAP (SDAP layer) of the NR protocol.

In the present embodiment, in a case that the protocol of E-UTRA and the protocol of NR are distinguished from each other, the PHY 200, the MAC 202, the RLC 204, the PDCP 206, and the RRC 208 may be hereinafter referred to as the PHY for E-UTRA or the PHY for LTE, the MAC for E-UTRA or the MAC for LTE, the RLC for E-UTRA or the RLC for LTE, the PDCP for E-UTRA or the PDCP for LTE, and the RRC for E-UTRA or the RRC for LTE, respectively. The PHY 200, the MAC 202, the RLC 204, the PDCP 206, and the RRC 208 may be referred to as an E-UTRA PHY or an LTE PHY, an E-UTRA MAC or an LTE MAC, an E-UTRA RLC or an LTE RLC, an E-UTRA PDCP or an LTE PDCP, an E-UTRA RRC or an LTE RRC, and the like, respectively. In a case that the protocol of E-UTRA and the protocol of NR are distinguished from each other, the PHY 300, the MAC 302, the RLC 304, the PDCP 306, and the RRC 308 may be referred to as a PHY for NR, a MAC for NR, an RLC for NR, an RLC for NR, and an RRC for NR, respectively. The PHY 300, the MAC 302, the RLC 304, the PDCP 306, and the RRC 308 may be referred to as an NR PHY, an NR MAC, an NR RLC, an NR PDCP, an NR RRC, and the like, respectively.

Entities in the AS layer of E-UTRA and/or NR will be described. An entity having a part or all of functions of the MAC layer may be referred to as a MAC entity. An entity having a part or all of functions of the RLC layer may be referred to as an RLC entity. An entity having a part or all of functions of the PDCP layer may be referred to as a PDCP entity. An entity having a part or all of functions of the SDAP layer may be referred to as an SDAP entity. An entity having a part or all of functions of the RRC layer may be referred to as an RRC entity. The MAC entity, the RLC entity, the PDCP entity, the SDAP entity, and the RRC entity may be replaced with a MAC, an RLC, a PDCP, an SDAP, and an RRC, respectively.

Note that data provided from the MAC, the RLC, the PDCP, and the SDAP to a lower layer, and/or data provided to the MAC, the RLC, the PDCP, and the SDAP from a lower layer may be referred to as a MAC Protocol Data Unit (PDU), an RLC PDU, a PDCP PDU, and an SDAP PDU, respectively. Data provided to the MAC, the RLC, the PDCP, and the SDAP from a higher layer, and/or data provided from the MAC, the RLC, the PDCP, and the SDAP to a higher layer may be referred to as a MAC Service Data Unit (SDU), an RLC SDU, a PDCP SDU, and an SDAP SDU, respectively. A segmented RLC SDU may be referred to as an RLC SDU segment.

Here, the base station apparatus and the terminal apparatus exchange (transmit and/or receive) signals with each other in higher layers. For example, the base station apparatus and the terminal apparatus may transmit and/or receive an RRC message (also referred to as RRC information or RRC signalling) in a Radio Resource Control (RRC) layer. In a Medium Access Control (MAC) layer, the base station apparatus and the terminal apparatus may transmit and/or receive a MAC control element. Additionally, the RRC layer of the terminal apparatus acquires system information broadcast from the base station apparatus. In this regard, the RRC message, the system information, and/or the MAC control element are also referred to as higher layer signaling or a higher layer parameter. Each of the parameters included in the higher layer signaling received by the terminal apparatus may be referred to as a higher layer parameter. In the processing of the PHY layer, the higher layer means a higher layer as viewed from the PHY layer, and thus may mean one or multiple of the MAC layer, the RRC layer, an RLC layer, a PDCP layer, a Non Access Stratum (NAS) layer, and the like. For example, in the processing of the MAC layer, the higher layer may mean one or multiple of the RRC layer, the RLC layer, the PDCP layer, the NAS layer, and the like. Hereinafter, "A is given (provided) in the higher layer" or "A is given (provided) by the higher layer" may mean that the higher layer (mainly the RRC layer, the MAC layer, or the like) of the terminal apparatus receives A from the base station apparatus, and that the received A is given (provided) from the higher layer of the terminal apparatus to the physical layer of the terminal apparatus. For example, "a higher layer parameter being provided" in the terminal apparatus may mean that higher layer signaling is received from the base station apparatus, and a higher layer parameter included in the received higher layer signaling is provided from the higher layer of the terminal apparatus to the physical layer of the terminal apparatus. A higher layer parameter being configured for the terminal apparatus may mean that the higher layer parameter is given (provided) to the terminal apparatus. For example, a higher layer parameter being configured for the terminal apparatus may mean that the terminal apparatus receives higher layer signaling from the base station apparatus and configures the received higher layer parameter in the higher layer. However, a higher layer parameter being configured for the terminal apparatus may include a default parameter given in advance being configured in the higher layer of the terminal apparatus. In description of transmission of an RRC message from the terminal apparatus to the base station apparatus, the expression that a message is submitted from the RRC entity of the terminal apparatus to a lower layer may be used. In the terminal apparatus, "submitting a message to a lower layer" from the RRC entity may mean submitting a message to the PDCP layer. In the terminal apparatus, "submitting a message to a lower layer" from the RRC layer may mean to submitting the message of the RRC to a PDCP entity corresponding to each SRB (SRBO, SRB1, SRB2, SRB3, or the like) because the message is transmitted using the SRB. In a case that the RRC entity of the terminal apparatus receives an indication from the lower layer, the lower layer may mean one or more of the PHY layer, the MAC layer, the RLC layer, the PDCP layer, and the like.

An example of the functions of the PHY will be described. The PHY of the terminal apparatus may have a function of receiving data transmitted from the PHY of the base station apparatus via a Downlink (DL) Physical Channel. The PHY of the terminal apparatus may have a function of transmitting data to the PHY of the base station apparatus via an Uplink (UL) physical channel. The PHY may be connected to an upper MAC with a Transport Channel. The PHY may deliver data to the MAC via the transport channel. The PHY may be provided with data from the MAC via the transport channel. In the PHY, in order to identify various pieces of control information, a Radio Network Temporary Identifier (RNTI) may be used.

Here, the physical channels will be described. The physical channels used for radio communication between the terminal apparatus and the base station apparatus may include the following physical channels.

- Physical Broadcast CHannel (PBCH)
- Physical Downlink Control CHannel (PDCCH)
- Physical Downlink Shared CHannel (PDSCH)
- Physical Uplink Control CHannel (PUCCH)
- Physical Uplink Shared CHannel (PUSCH)
- Physical Random Access CHannel (PRACH)

The PBCH may be used to broadcast system information required by the terminal apparatus.

The PBCH may be used to broadcast time indexes (SSB-Indexes) within the periodicity of Synchronization Signal Blocks (SSBs) in NR.

The PDCCH may be used to transmit (or carry) Downlink Control Information (DCI) in downlink radio communication (radio communication from the base station apparatus to the terminal apparatus). Here, one or multiple pieces of DCI (which may be referred to as DCI formats) may be defined for transmission of the downlink control information. In other words, a field for the downlink control information may be defined as DCI and may be mapped to information bits. The PDCCH may be transmitted in PDCCH candidates. The terminal apparatus may monitor a set of PDCCH candidates in a serving cell. To monitor a set of PDCCH candidates may mean an attempt to decode the PDCCH in accordance with a certain DCI format. The terminal apparatus may use a Control Resource Set (CORESET) to monitor a set of PDCCH candidates. The DCI format may be used for scheduling of the PUSCH in the serving cell. The PUSCH may be used for transmission of user data, transmission of RRC messages to be described below, and the like.

The PUCCH is used to transmit Uplink Control Information (UCI) in a case of uplink radio communication (radio communication from the terminal apparatus to the base station apparatus). Here, the uplink control information may include Channel State Information (CSI) used to indicate a downlink channel state. The uplink control information may include a Scheduling Request (SR) used for requesting Uplink Shared CHannel (UL-SCH) resources. The uplink control information may include a Hybrid Automatic Repeat reQuest ACKnowledgement (HARQ-ACK).

The PDSCH may be used to transmit downlink data (Downlink Shared CHannel (DL-SCH)) from the MAC layer. In a case of the downlink, the PDSCH may be used to transmit System Information (SI), a Random Access Response (RAR), and the like.

The PUSCH may be used to transmit uplink data (Uplink-Shared CHannel (UL-SCH)) from the MAC layer or to transmit the HARQ-ACK and/or CSI along with the uplink data. The PUSCH may be used to transmit CSI only or a HARQ-ACK and CSI only. In other words, the PUSCH may be used to transmit the UCI only. The PDSCH or the PUSCH may be used to transmit RRC signalling (also referred to as an RRC message) and a MAC CE. In this regard, in the PDSCH, the RRC signalling transmitted from the base station apparatus may be signalling common to multiple terminal apparatuses in a cell. The RRC signalling transmitted from the base station apparatus may be dedicated signaling for a certain terminal apparatus (also referred to as dedicated signaling). In other words, terminal apparatus-specific (UE-specific) information may be transmitted by using dedicated signaling to the certain terminal apparatus. Additionally, the PUSCH may be used to transmit UE Capabilities in the uplink.

The PRACH may be used for transmitting a random access preamble. The PRACH may be used to indicate an initial connection establishment procedure, a handover procedure, a connection reestablishment procedure, synchronization (timing adjustment) for uplink transmission, and a request for a UL-SCH resource.

An example of the functions of the MAC will be described. The MAC may be referred to as a MAC sublayer. The MAC may have a function of mapping various Logical Channels to their corresponding transport channels. The logical channel may be identified with a logical channel identifier (Logical Channel Identity or Logical Channel ID). The MAC may be connected to an upper RLC with a logical channel. The logical channel may be classified into a control channel for transmitting control information and a traffic channel for transmitting user information depending on the type of information to be transmitted. The logical channel may be classified into an uplink logical channel and a downlink logical channel. The MAC may have a function of multiplexing MAC SDUs belonging to one or multiple different logical channels and providing the multiplexed MAC SDUs to the PHY. The MAC may have a function of demultiplexing the MAC PDUs provided from the PHY and providing the demultiplexed MAC PDUs to a higher layer via the logical channels to which the respective MAC SDUs belong. The MAC may have a function of performing error correction through a Hybrid Automatic Repeat reQuest (HARQ). The MAC may have a function of reporting scheduling information. The MAC may have a function of performing priority processing among the terminal apparatuses by using dynamic scheduling. The MAC may have a function of performing priority processing among the logical channels in one terminal apparatus. The MAC may have a function of performing priority processing of resources overlapping in one terminal apparatus. The E-UTRA MAC may have a function of identifying Multimedia Broadcast Multicast Services (MBMS). The NR MAC may have a function of identifying a Multicast Broadcast Service (MBS). The MAC may have a function of selecting a transport format. The MAC may have a function of performing Discontinuous Reception (DRX) and/or Discontinuous Transmission (DTX), a function of executing a RandomAccess (RA) procedure, a Power Headroom Report (PHR) function of providing notification of information of transmittable power, a Buffer Status Report (BSR) function of providing notification of data volume information of a transmission buffer, and the like. The NR MAC may have a Bandwidth Adaptation (BA) function. A MAC PDU format used in the E-UTRA MAC and a MAC PDU format used in the NR MAC may be different from each other. The MAC PDU may include a MAC control element (MAC CE) being an element for performing control in the MAC.

Uplink (UL) and/or Downlink (DL) logical channels used in E-UTRA and/or NR will be described.

A Broadcast Control Channel (BCCH) may be a downlink logical channel for broadcasting control information, such as System Information (SI).

A Paging Control Channel (PCCH) may be a downlink logical channel for carrying a Paging message.

A Common Control Channel (CCCH) may be a logical channel for transmitting control information between the terminal apparatus and the base station apparatus. The CCCH may be used in a case that the terminal apparatus does not have RRC connection. The CCCH may be used between the base station apparatus and multiple terminal apparatuses.

A Dedicated Control Channel (DCCH) may be a logical channel for transmitting dedicated control information in a point-to-point bi-directional manner between the terminal apparatus and the base station apparatus. The dedicated control information may be control information dedicated to each terminal apparatus. The DCCH may be used in a case that the terminal apparatus has RRC connection.

A Dedicated Traffic Channel (DTCH) may be a logical channel for transmitting user data in a point-to-point manner between the terminal apparatus and the base station apparatus. The DTCH may be a logical channel for transmitting dedicated user data. The dedicated user data may be user data dedicated to each terminal apparatus. The DTCH may be present in both of the uplink and the downlink.

Mapping between the logical channels and the transport channels in uplink, in E-UTRA and/or NR will be described.

The CCCH may be mapped to an Uplink Shared Channel (UL-SCH) being an uplink transport channel.

The DCCH may be mapped to an Uplink Shared Channel (UL-SCH) being an uplink transport channel.

The DTCH may be mapped to an Uplink Shared Channel (UL-SCH) being an uplink transport channel.

Mapping between the logical channels and the transport channels in downlink, in E-UTRA and/or NR will be described.

The BCCH may be mapped to a Broadcast Channel (BCH) and/or a Downlink Shared Channel (DL-SCH) being a downlink transport channel.

The PCCH may be mapped to a Paging Channel (PCH) being a downlink transport channel.

The CCCH may be mapped to a Downlink Shared Channel (DL-SCH) being a downlink transport channel.

The DCCH may be mapped to a Downlink Shared Channel (DL-SCH) being a downlink transport channel.

The DTCH may be mapped to a Downlink Shared Channel (DL-SCH) being a downlink transport channel.

An example of the functions of the RLC will be described. The RLC may be referred to as an RLC sublayer. The E-UTRA RLC may have a function of segmenting (Segmentation) and/or concatenating (Concatenation) data provided from the PDCP of a higher layer, and providing the segmented and/or concatenated data to a lower layer. The E-UTRA RLC may have a function of reassembling (reassembly) and re-ordering data provided from a lower layer, and providing the reassembled and re-ordered data to a higher layer. The NR RLC may have a function of assigning data provided from the PDCP of a higher layer with a sequence number independent of a sequence number assigned in the PDCP. The NR RLC may have a function of segmenting (Segmentation) data provided from the PDCP and providing the segmented data to a lower layer. The NR RLC may have a function of reassembling (reassembly) data provided from a lower layer, and providing the reassembled data to a higher layer. The RLC may have a data retransmission function and/or retransmission request function (Automatic Repeat reQuest (ARQ)). The RLC may have a function of performing error correction using the ARQ. Control information that indicates data required to be retransmitted and that is transmitted from a receiving side to a transmitting side of the RLC in order to perform the ARQ may be referred to as a status report. A status report transmission indication transmitted from the transmitting side to the receiving side of the RLC may be referred to as a poll. The RLC may have a function of detecting data duplication. The RLC may have a function of discarding data. The RLC may have three modes, namely a Transparent Mode (TM), an Unacknowledged Mode (UM), and an Acknowledged Mode (AM). In the TM, segmentation of data received from a higher layer may not be performed, and addition of an RLC header may not be performed. A TM RLC entity may be a uni-directional entity, and may be configured as a transmitting TM RLC entity or as a receiving TM RLC entity. In the UM, segmentation and/or concatenation of data received from a higher layer, addition of an RLC header, and the like may be performed, but retransmission control of data may not be performed. A UM RLC entity may be a uni-directional entity, or may be a bi-directional entity. In a case that the UM RLC entity is a uni-directional entity, the UM RLC entity may be configured as a transmitting UM RLC entity or as a receiving UM RLC entity. In a case that the UM RLC entity is a bi-directional entity, the UM RRC entity may be configured as a UM RLC entity including a transmitting side and a receiving side. In the AM, segmentation and/or concatenation of data received from a higher layer, addition of an RLC header, retransmission control of data, and the like may be performed. An AM RLC entity may be a bi-directional entity, and may be configured as an AM RLC including a transmitting side and a receiving side. Note that data provided to a lower layer and/or data provided from a lower layer in the TM may be referred to as a TMD PDU. Data provided to a lower layer and/or data provided from a lower layer in the UM may be referred to as a UMD PDU. Data provided to a lower layer or data provided from a lower layer in the AM may be referred to as an AMD PDU. An RLC PDU format used in the E-UTRA RLC and an RLC PDU format used in the NR RLC may be different from each other. The RLC PDU may include an RLC PDU for data and an RLC PDU for control. The RLC PDU for data may be referred to as an RLC DATA PDU (RLC Data PDU, RLC data PDU). The RLC PDU for control may be referred to as an RLC CONTROL PDU (RLC Control PDU, RLC control PDU).

An example of the functions of the PDCP will be described. The PDCP may be referred to as a PDCP sublayer. The PDCP may have a function of maintenance of the sequence number. The PDCP may have a header compression and decompression function for efficiently transmitting, in wireless sections, user data such as an IP Packet and an Ethernet frame. A protocol used for header compression and decompression for an IP packet may be referred to as a Robust Header Compression (ROHC) protocol. A protocol used for header compression and decompression for an Ethernet frame may be referred to as an Ethernet (trade name) Header Compression (EHC) protocol. The PDCP may have a function of encrypting and decrypting data. The PDCP may have a function of data integrity protection and integrity verification. The PDCP may have a function of re-ordering. The PDCP may have a function of retransmitting the PDCP SDU. The PDCP may have a function of discarding data using a discard timer. The PDCP may have a Duplication function. The PDCP may have a function of discarding pieces of data received in a duplicate manner. The PDCP entity may be a bi-directional entity, and may include a transmitting PDCP entity and a receiving PDCP entity. A PDCP PDU format used in the E-UTRA PDCP and a PDCP PDU format used in the NR PDCP may be different from each other. The PDCP PDU may include a PDCP PDU for data and a PDCP PDU for control. The PDCP PDU for data may be referred to as a PDCP DATA PDU (PDCP Data PDU, PDCP data PDU). The PDCP PDU for control may be referred to as a PDCP CONTROL PDU (PDCP Control PDU, PDCP control PDU).

An example of the functions of the SDAP will be described. The SDAP is a service data adaptation protocol layer. The SDAP may have a function of performing association (mapping) between a downlink QoS flow transmitted from the 5GC 110 to the terminal apparatus via the base station apparatus and a data radio bearer (DRB) and/or mapping between an uplink QoS flow transmitted from the terminal apparatus to the 5GC 110 via the base station apparatus and a DRB. The SDAP may have a function of storing mapping rule information. The SDAP may have a function of performing marking of a QoS flow identifier (QoS Flow ID (QFI)). Note that the SDAP PDU may include an SDAP PDU for data and an SDAP PDU for control. The SDAP PDU for data may be referred to as an SDAP DATA PDU (SDAP Data PDU, SDAP data PDU). The SDAP PDU for control may be referred to as an SDAP CONTROL PDU (SDAP Control PDU, SDAP control PDU). Note that, in the terminal apparatus, one SDAP entity may be present for one PDU session.

An example of the functions of the RRC will be described. The RRC may have a broadcast function. The RRC may have a Paging function from the EPC 104 and/or the 5GC 110. The RRC may have a Paging function from the gNB 108 or the eNB 102 connected to the 5GC 110. The RRC may have an RRC connection management function. The RRC may have a radio bearer control function. The RRC may have a cell group control function. The RRC may have a mobility control function. The RRC may have a terminal apparatus measurement reporting and terminal apparatus measurement reporting control function. The RRC may have a QoS management function. The RRC may have a radio link failure detection and recovery function. The RRC may perform broadcasting, paging, RRC connection management, radio bearer control, cell group control, mobility control, terminal apparatus measurement reporting and terminal apparatus measurement reporting control, QoS management, detection and recovery of radio link failure, and the like by using the RRC message. Note that RRC messages and parameters used in the E-UTRA RRC may be different from RRC messages and parameters used in the NR RRC.

The RRC message may be transmitted using the BCCH of the logical channel, may be transmitted using the PCCH of the logical channel, may be transmitted using the CCCH of the logical channel, or may be transmitted using the DCCH of the logical channel. The RRC message transmitted using the DCCH may be replaced with Dedicated RRC signaling or RRC signalling.

In the RRC message transmitted using the BCCH, for example, a Master Information Block (MIB) may be included, a System Information Block (SIB) of each type may be included, or another RRC message may be included. In the RRC message transmitted using the PCCH, for example, a paging message may be included, or another RRC message may be included.

In the RRC message transmitted in the uplink (UL) direction using the CCCH, for example, an RRC setup request message (RRC Setup Request), an RRC resume request message (RRC Resume Request), an RRC reestablishment request message (RRC Reestablishment Request), an RRC system information request message (RRC System Info Request), and the like may be included. For example, an RRC connection request message (RRC Connection Request), an RRC connection resume request message (RRC Connection Resume Request), an RRC connection reestablishment request message (RRC Connection Reestablishment Request), and the like may be included. Another RRC message may be included.

In the RRC message transmitted in the downlink (DL) direction using the CCCH, for example, an RRC connection reject message (RRC Connection Reject), an RRC connection setup message (RRC Connection Setup), an RRC connection reestablishment message (RRC Connection Reestablishment), an RRC connection reestablishment reject message (RRC Connection Reestablishment Reject), and the like may be included. For example, an RRC reject message (RRC Reject), an RRC setup message (RRC Setup), and the like may be included. Another RRC message may be included.

In the RRC signalling transmitted in the uplink (UL) direction using the DCCH, for example, a measurement report message (Measurement Report), an RRC connection reconfiguration complete message (RRC Connection Reconfiguration Complete), an RRC connection setup complete message (RRC Connection Setup Complete), an RRC connection reestablishment complete message (RRC Connection Reestablishment Complete), a security mode complete message (Security Mode Complete), a UE capability information message (UE Capability Information), and the like may be included. For example, a measurement report message (Measurement Report), an RRC reconfiguration complete message (RRC Reconfiguration Complete), an RRC setup complete message (RRC Setup Complete), an RRC reestablishment complete message (RRC Reestablishment Complete), an RRC resume complete message (RRC Resume Complete), a security mode complete message (Security Mode Complete), a UE capability information message (UE Capability Information), and the like may be included. Another RRC signalling may be included.

In the RRC signalling transmitted in the downlink (DL) direction using the DCCH, for example, an RRC connection reconfiguration message (RRC Connection Reconfiguration), an RRC connection release message (RRC Connection Release), a security mode command message (Security Mode Command), a UE capability enquiry message (UE Capability Enquiry), and the like may be included. For example, an RRC reconfiguration message (RRC Reconfiguration), an RRC resume message (RRC Resume), an RRC release message (RRC Release), an RRC reestablishment message (RRC Reestablishment), a security mode command message (Security Mode Command), a UE capability enquiry message (UE Capability Enquiry), and the like may be included. Another RRC signalling may be included.

An example of the functions of the NAS will be described. The NAS may have an authentication function. The NAS may have a function of performing mobility management. The NAS may have a function of security control.

The functions of the PHY, the MAC, the RLC, the PDCP, the SDAP, the RRC, and the NAS described above are merely an example, and a part or all of each of the functions may not be implemented. Some or all of the functions of each layer may be included in another layer.

The state transition of the UE 122 in LTE and NR will now be described. The UE 122 connected to an EPC or a 5GC may be in an RRC_CONNECTED state when an RRC connection has been established. The state in which an RRC connection has been established may include a state in which the UE 122 retains a part or all of UE contexts to be described below. In addition, the state in which an RRC connection has been established may include a state in which the UE 122 can transmit and/or receive unicast data. Regarding the UE 122, in a case that the RRC connection is suspended, the UE 122 may be in an RRC_INACTIVE state. The case that the UE 122 is in the RRC_INACTIVE state may be a case that the UE 122 is connected to the 5GC and the RRC connection is suspended. In a case that the UE 122 is in neither the RRC_CONNECTED state nor the RRC_INACTIVE state, the UE 122 may be in an RRC_IDLE state.

Note that, in a case that the UE 122 is connected to the EPC, suspension of the RRC connection may be initiated by the E-UTRAN although the UE 122 does not have the RRC_INACTIVE state. In a case that the UE 122 is connected to the EPC and the RRC connection is suspended, the UE 122 may transition to the RRC_IDLE state while retaining an AS context of the UE and an identifier (resumeIdentity) used for resumption (resume). In a case that the UE 122 retains the AS context of the UE and that the E-UTRAN permits the RRC connection to be resumed and that the UE 122 needs to transition from the RRC_IDLE state to the RRC_CONNECTED state, a higher layer (for example, the NAS layer) of the RRC layer of the UE 122 may initiate the resumption of the RRC connection suspended.

The definition of the suspension may vary between the UE 122 connected to the EPC 104 and the UE 122 connected to the 5GC 110. All or some of the procedures for the UE 122 to resume from suspension may be different between a case that the UE 122 is connected to the EPC (the UE 122 is suspended in the RRC_IDLE state) and a case that the UE 122 is connected to the 5GC (the UE 122 is suspended in the RRC_INACTIVE state).

Note that the RRC_CONNECTED state, the RRC_INACTIVE state, and the RRC_IDLE state may be respectively referred to as a connected state (connected mode), an inactive state (inactive mode), and an idle state (idle mode), or may be respectively referred to as an RRC connected state (RRC connected mode), an RRC inactive state (RRC inactive mode), and an RRC idle state (RRC idle mode).

The AS context of the UE retained by the UE 122 may be information including all or some of a current RRC configuration, a current security context, a PDCP state including a RObust Header Compression (ROHC) state, a Cell Radio Network Temporary Identifier (C-RNTI) used in a PCell of a connection source, a cell identity (cellIdentity), and a physical cell identity of the PCell of the connection source. Note that the AS context of the UE retained by one or all of the eNB 102 and the gNB 108 may include information identical to the information of the AS context of the UE retained by the UE 122, or may include information different from the information included in the AS context of the UE retained by the UE 122.

The security context may be information including all or some of an encryption key at the AS level, a Next Hop parameter (NH), a Next Hop Chaining Counter parameter (NCC) used to derive an access key for the next hop, an identifier of an encryption algorithm at a selected AS level, and a counter used for replay protection.

Now, the Serving Cell will be described. In the terminal apparatus in the RRC connected state in which CA and/or DC described below is not configured, the serving cell may include one Primary Cell (PCell). In the terminal apparatus in the RRC connected state in which CA and/or DC described below is configured, multiple serving cells may mean a set of cell(s) including one or more Special Cells (SpCells) and one or more all Secondary Cells (SCells). The SpCell may support PUCCH transmission and contention-based Random Access (CBRA), and the SpCell may be constantly activated. The PCell may be a cell used for an RRC connection establishment procedure in a case that the terminal apparatus in the RRC idle state transitions to the RRC connected state. The PCell may be a cell used for an RRC connection reestablishment procedure in which the terminal apparatus performs reestablishment of RRC connection. The PCell may be a cell used for a random access procedure in a case of a handover. The PSCell may be a cell used for the random access procedure in a case of addition of a secondary node described below. The SpCell may be a cell used for purposes other than the purposes described above.

The group of serving cells configured for the terminal apparatus including the SpCell and one or more SCells may be considered as carrier aggregation (CA) being configured for the terminal apparatus. For the terminal apparatus configured with CA, a cell that provides additional radio resources to the SpCell may mean the SCell.

A group of serving cells configured by the RRC, which is a group of serving cells using the same timing reference cell and the same timing advance value for cells out of the group configured with the uplink may be referred to as a Timing Advance Group (TAG). The TAG including the SpCell of the MAC entity may mean a Primary Timing Advance Group (PTAG). The TAG other than the PTAG may mean a Secondary Timing Advance Group (STAG). Note that one or more of the TAGs may be configured for each cell group described below.

The Cell Group configured for the terminal apparatus from the base station apparatus will be described. The cell group may include one SpCell. In other words, the cell group may include one SpCell and one or multiple SCells. In other words, the cell group may include one SpCell, and optionally one or multiple SCells. The cell group may be expressed as a set of cells.

Dual Connectivity (DC) may be a technology for performing data communication by using radio resources of the cell groups configured by each of a first base station apparatus (first node) and a second base station apparatus (second node). In a case that DC or MR-DC described below is performed, the base station apparatus may add a cell group to the terminal apparatus. In order to perform DC, the first base station apparatus may add the second base station apparatus. The first base station apparatus may be referred to as a Master Node (MN). The cell group configured by the master node may be referred to as a Master Cell Group (MCG). The second base station apparatus may be referred to as a Secondary Node (SN). The cell group configured by the secondary node may be referred to as a Secondary Cell Group (SCG). Note that the master node and the secondary node may be configured in the same base station apparatus.

In a case that DC is not configured, the cell group configured for the terminal apparatus may be referred to as an MCG. In the case that DC is not configured, the SpCell configured for the terminal apparatus may be the PCell. In addition, NR in which DC is not configured may be referred to as NR stand-alone.

Note that Multi-Radio Dual Connectivity (MR-DC) may be a technology for performing DC using E-UTRA for the MCG and NR for the SCG. MR-DC may be a technology for performing DC using NR for the MCG and E-UTRA for the SCG. MR-DC may be a technology for performing DC using NR for both of the MCG and the SCG. MR-DC may be a technology included in DC. As an example of MR-DC using E-UTRA for the MCG and NR for the SCG, there may be E-UTRA-NR Dual Connectivity (EN-DC) using the EPC as a core network, or there may be NG-RAN E-UTRA-NR Dual Connectivity (NGEN-DC) using the 5GC as a core network. As an example of MR-DC using NR for the MCG and E-UTRA for the SCG, there may be NR-E-UTRA Dual Connectivity (NE-DC) using the 5GC as a core network. As an example of MR-DC using NR for both of the MCG and the SCG, there may be NR-NR Dual Connectivity (NR-DC) using the 5GC as a core network.

Note that, in the terminal apparatus, one MAC entity may be present for each cell group. For example, in a case that DC or MR-DC is configured for the terminal apparatus, one MAC entity may be present for the MCG, and one MAC entity may be present for the SCG. The MAC entity for the MCG in the terminal apparatus may be constantly established for the terminal apparatus in all of the states (the RRC idle state, the RRC connected state, the RRC inactive state, and the like). The MAC entity for the SCG in the terminal apparatus may be created by the terminal apparatus in a case that the SCG is configured for the terminal apparatus. Configuration of the MAC entity for each cell group of the terminal apparatus may be performed in a case that the terminal apparatus receives RRC signalling from the base station apparatus. In a case that the MAC entity is associated with the MCG, the SpCell may mean the PCell. In a case that the MAC entity is associated with the SCG, the SpCell may mean a Primary SCG Cell (PSCell). In a case that the MAC entity is not associated with the cell group, the SpCell may mean the PCell. The PCell, the PSCell, and the SCell are each a serving cell. In EN-DC and NGEN-DC, the MAC entity for the MCG may be an E-UTRA MAC entity, and the MAC entity for the SCG may be an NR MAC entity. In NE-DC, the MAC entity for the MCG may be an NR MAC entity, and the MAC entity for the SCG may be an E-UTRA MAC entity. In NR-DC, the MAC entities for the MCG and the SCG may each be an NR MAC entity. Note that a case that one MAC entity is present for each cell group may be alternatively described as a case that one MAC entity is present for each SpCell. One MAC entity for each cell group may be replaced with one MAC entity for each SpCell.

The radio bearers will be described. In a case that the terminal apparatus communicates with the base station apparatus, radio connection may be performed by establishing a Radio Bearer (RB) between the terminal apparatus and the base station apparatus. The radio bearer used for the CP may be referred to as a Signaling Radio Bearer (SRB). The radio bearer used for the UP may be referred to as a Data Radio Bearer (DRB). Each radio bearer may be assigned a radio bearer identity (Identity (ID)). The radio bearer identity for the SRB may be referred to as an SRB identity (SRB Identity or SRB ID). The radio bearer identity for the DRB may be referred to as a DRB identity (DRB Identity or DRB ID). For the SRBs of E-UTRA, SRB0 to SRB2 may be defined, or SRBs other than these may be defined. For the SRBs of NR, SRB0 to SRB3 may be defined, or SRBs other than these may be defined. SRBO may be an SRB for an RRC message transmitted and/or received using the CCCH of the logical channel. SRB1 may be an SRB for RRC signalling, and for NAS signalling before establishment of SRB2. The RRC signalling transmitted and/or received using SRB1 may include a piggybacked NAS signalling. For all of RRC signalling and NAS signalling transmitted and/or received using SRB1, the DCCH of the logical channel may be used. SRB2 may be an SRB for NAS signalling, and for RRC signalling including loggedmeasurement information. For all of RRC signalling and NAS signalling transmitted and/or received using SRB2, the DCCH of the logical channel may be used. SRB2 may have a priority lower than that of SRB1. SRB3 may be an SRB for transmitting and/or receiving specific RRC signalling in a case that EN-DC, NGEN-DC, NR-DC, or the like is configured for the terminal apparatus. For all of RRC signalling and NAS signalling transmitted and/or received using SRB3, the DCCH of the logical channel may be used. Other SRBs may be provided for other purposes. The DRB may be a radio bearer for user data. For RRC signalling transmitted and/or received using the DRB, the DTCH of the logical channel may be used.

The radio bearers in the terminal apparatus will be described. The radio bearers include an RLC bearer. The RLC bearer may include one or two RLC entities and a logical channel. The RLC entities in a case that the RLC bearer includes two RLC entities may be the transmitting RLC entity and the receiving RLC entity in the TM RLC entity and/or the uni-directional UM mode RLC entity. SRB0 may include one RLC bearer. The RLC bearer of SRB0 may include the RLC entity of TM, and a logical channel. SRB0 may be constantly established in the terminal apparatus in all of the states (the RRC idle state, the RRC connected state, the RRC inactive state, and the like). In a case that the terminal apparatus transitions from the RRC idle state to the RRC connected state, one SRB1 may be established and/or configured for the terminal apparatus, using RRC signalling received from the base station apparatus. SRB1 may include one PDCP entity, and one or multiple RLC bearers. The RLC bearer of SRB1 may include the RLC entity of AM, and a logical channel. One SRB2 may be established and/or configured for the terminal apparatus, using RRC signalling that the terminal apparatus in the RRC connected state with activated AS security receives from the base station apparatus. SRB2 may include one PDCP entity, and one or multiple RLC bearers. The RLC bearer of SRB2 may include the RLC entity of AM, and a logical channel. Note that the PDCP of SRB1 and SRB2 on the base station apparatus side may be deployed in the master node. In a case that the secondary node in EN-DC, NGEN-DC, or NR-DC is added or in a case that the secondary node is changed, one SRB3 may be established and/or configured for the terminal apparatus, using RRC signalling that the terminal apparatus in the RRC connected state with activated AS security receives from the base station apparatus. SRB3 may be a direct SRB between the terminal apparatus and the secondary node. SRB3 may include one PDCP entity, and one or multiple RLC bearers. The RLC bearer of SRB3 may include the RLC entity of AM, and a logical channel. The PDCP of the SRB3 on the base station apparatus side may be deployed in the secondary node. One or multiple DRBs may be established and/or configured for the terminal apparatus, using RRC signalling that the terminal apparatus in the RRC connected state with activated AS security receives from the base station apparatus. The DRB may include one PDCP entity, and one or multiple RLC bearers. The RLC bearer of the DRB may include the RLC entity of AM or UM, and a logical channel.

Note that, in MR-DC, the radio bearer whose PDCP is deployed in the master node may be referred to as an MN terminated bearer. In MR-DC, the radio bearer whose PDCP is deployed in the secondary node may be referred to as an SN terminated bearer. Note that, in MR-DC, the radio bearer whose RLC bearer is present only in the MCG may be referred to as an MCG bearer. In MR-DC, the radio bearer whose RLC bearer is present only in the SCG may be referred to as an SCG bearer. In DC, the radio bearer whose RLC bearer is present in both of the MCG and the SCG may be referred to as a split bearer.

In a case that MR-DC is configured for the terminal apparatus, a bearer type of SRB1 and SRB2 established/ and or configured for the terminal apparatus may be an MN terminated MCG bearer and/or an MN terminated split bearer. In a case that MR-DC is configured for the terminal apparatus, a bearer type of SRB3 established/ and or configured for the terminal apparatus may be an SN terminated SCG bearer. In a case that MR-DC is configured for the terminal apparatus, a bearer type of the DRB established/ and or configured for the terminal apparatus may be any one of all of the bearer types.

The RLC entity established and/or configured for the RLC bearer established and/or configured for the cell group configured in E-UTRA may be the E-UTRA RLC. The RLC entity established and/or configured for the RLC bearer established and/or configured for the cell group configured in NR may be the NR RLC. In a case that EN-DC is configured for the terminal apparatus, the PDCP entity established and/or configured for the MN terminated MCG bearer may be either the E-UTRA PDCP or the NR PDCP. In a case that EN-DC is configured for the terminal apparatus, the PDCP established and/or configured for the radio bearers of other bearer types, i.e., an MN terminated split bearer, an MN terminated SCG bearer, an SN terminated MCG bearer, an SN terminated split bearer, and an SN terminated SCG bearer, may be the NR PDCP. In a case that NGEN-DC, NE-DC, or NR-DC is configured for the terminal apparatus, the PDCP entity established and/or configured for the radio bearers of all of the bearer types may be the NR PDCP.

Note that, in NR, the DRB established and/or configured for the terminal apparatus may be associated with one PDU session. One SDAP entity may be established and/or configured for one PDU session in the terminal apparatus. The SDAP entity, the PDCP entity, the RLC entity, and the logical channel established and/or configured for the terminal apparatus may be established and/or configured using RRC signalling that the terminal apparatus receives from the base station apparatus.

Note that regardless of whether MR-DC is configured, a network configuration in which the master node is the eNB 102 and the EPC 104 is used as a core network may be referred to as E-UTRA/EPC. A network configuration in which the master node is the eNB 102 and the 5GC 110 is used as a core network may be referred to as E-UTRA/5GC. A network configuration in which the master node is the gNB 108 and the 5GC 110 is used as a core network may be referred to as NR or NR/5GC. In a case that MR-DC is not configured, the master node described above may mean the base station apparatus that performs communication with the terminal apparatus.

Next, the handover in LTE and NR will be described. The handover may be processing in which the UE 122 in the RRC connected state changes the serving cell from a source SpCell to a target SpCell. The handover may be part of mobility control performed by RRC. The handover may be performed in a case that the UE 122 receives RRC signalling indicating handover from the eNB 102 and/or the gNB 108. The RRC signalling indicating handover may be a message related to reconfiguration of RRC connection including a parameter indicating handover (for example, an information element referred to as MobilityControlInfo, or an information element referred to as ReconfigurationWithSync). Note that the information element referred to as MobilityControlInfo described above may be replaced with a mobility control configuration information element, a mobility control configuration, or mobility control information. Note that the information element referred to as ReconfigurationWithSync described above may be replaced with a reconfiguration with synchronization information element, or a reconfiguration with synchronization. Alternatively, the RRC signalling indicating handover may be a message (for example, MobilityFromEUTRACommand, or MobilityFromNRCommand) indicating movement to a cell of another RAT. The handover may be replaced with a reconfiguration with synchronization (reconfiguration with sync). The reconfiguration with synchronization may be triggered by RRC, or may be triggered by DCI or a MAC control element. Conditions that allow the UE 122 to perform handover may include some or all of a case of AS security being activated, a case of the SRB2 being established, and a case of at least one DRB being established. The above-described handover may be replaced with layer 3 handover or the like.

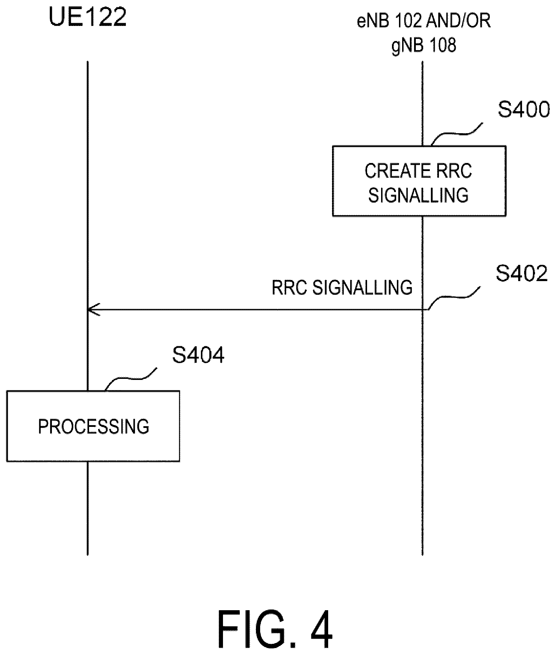

A flow of the RRC signalling transmitted and/or received between the terminal apparatus and the base station apparatus will be described. FIG. 4 is a diagram illustrating an example of a flow of a procedure for various configurations in the RRC according to the present embodiment. FIG. 4 is an example of a flow of a case in which the RRC signalling is transmitted from the base station apparatus (eNB 102 and/or gNB 108) to the terminal apparatus (UE 122).

In FIG. 4, the base station apparatus creates an RRC message (Step S400). The creation of the RRC message in the base station apparatus may be performed so that the base station apparatus distributes System Information (SI) and a paging message. The creation of the RRC message in the base station apparatus may be performed so that the base station apparatus transmits RRC signalling that causes a specific terminal apparatus to perform processing. The processing that the specific terminal apparatus is caused to perform may include, for example, processing such as configuration related to security, reconfiguration of an RRC connection, a handover to a different RAT, suspension of an RRC connection, release of an RRC connection, and the like. The reconfiguration of an RRC connection may include, for example, processing such as control (establishment, modification, release, or the like) of a radio bearer, control (establishment, addition, modification, release, or the like) of a cell group, measurement configuration, a handover, security key update, and the like. The creation of the RRC message in the base station apparatus may be performed for a response to RRC signalling transmitted from the terminal apparatus. The response to the RRC signalling transmitted from the terminal apparatus may include, for example, a response to an RRC setup request, a response to an RRC reconnection request, a response to an RRC resume request, and the like. The RRC message includes information (parameters) for various information notifications and configurations. These parameters may be referred to as fields and/or information elements, and may be notated by using a notation method referred to as Abstract Syntax Notation One (ASN.1).

In FIG. 4, the base station apparatus then transmits the RRC signalling created, to the terminal apparatus (Step S402). Then, in a case that processing such as a configuration is necessary in accordance with the RRC signalling received, the terminal apparatus performs the processing (Step S404). The terminal apparatus that has performed the processing may transmit RRC signalling for a response to the base station apparatus (not illustrated).

In addition to the example described above, the RRC signalling may be used for other purposes as well.

Note that in MR-DC, the RRC on the master node side may be used to transfer the RRC signalling for the configuration (cell group configuration, radio bearer configuration, measurement configuration, and the like) on the SCG side to and from the terminal apparatus. For example, in EN-DC or NGEN-DC, the RRC signalling of E-UTRA transmitted and/or received between the eNB 102 and the UE 122 may include the RRC signalling of NR in a form of a container. In NE-DC, the RRC signalling of NR transmitted and/or received between the gNB 108 and the UE 122 may include the RRC signalling of E-UTRA in a form of a container. The RRC signalling for the configuration on the SCG side may be transmitted and/or received between the master node and the secondary node.

Note that an embodiment is not limited to a case that MR-DC is used, and the RRC signalling for E-UTRA transmitted from the eNB 102 to the UE 122 may include the RRC signalling for NR, and the RRC signalling for NR transmitted from the gNB 108 to the UE 122 may include the RRC signalling for E-UTRA.

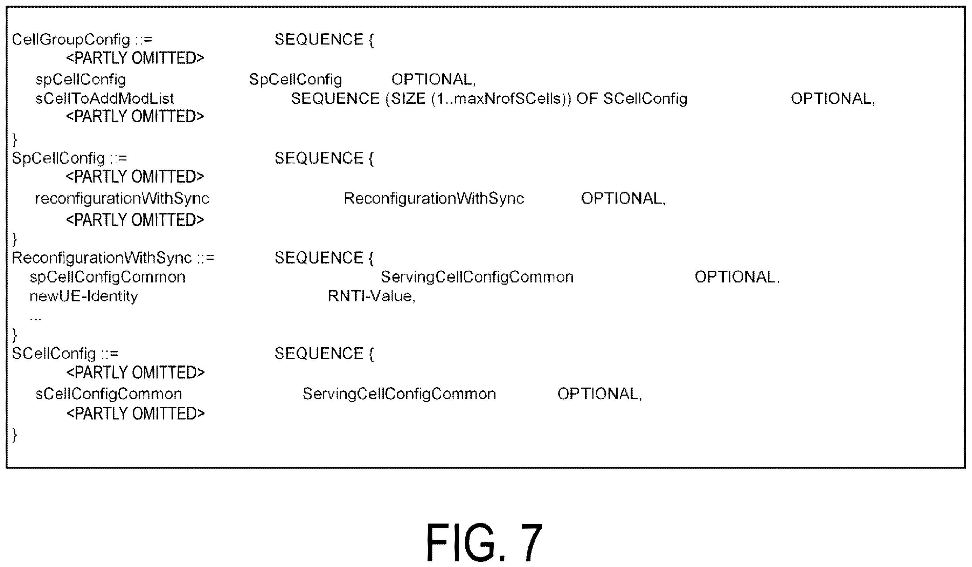

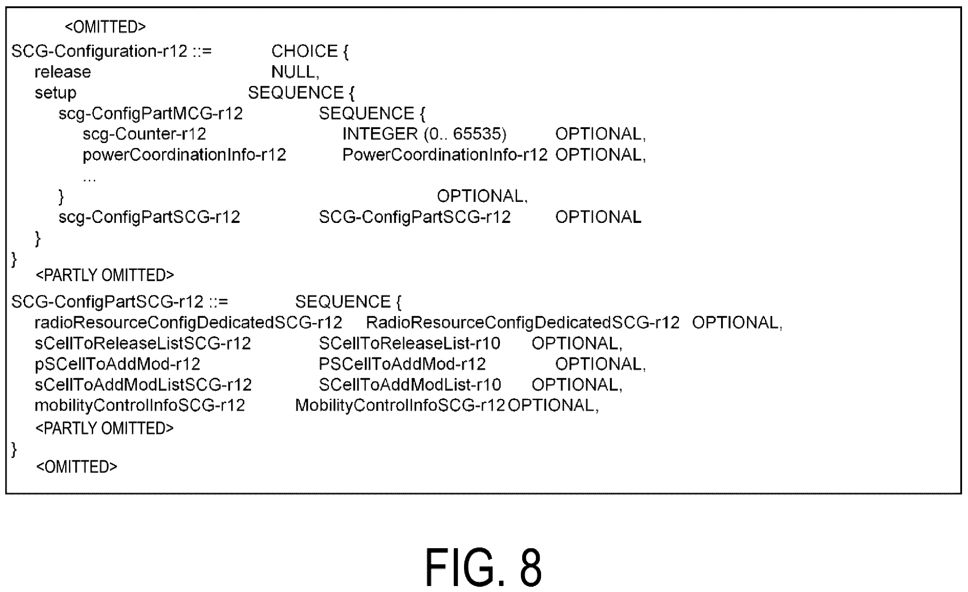

An example of parameters included in the message related to reconfiguration of an RRC connection will be described. FIG. 7 is an example of an ASN.1 notation representing a field and/or an information element related to a cell group configuration included in a message related to reconfiguration of an RRC connection in NR in FIG. 4. FIG. 8 is an example of an ASN.1 notation representing a field and/or an information element related to a cell group configuration included in a message related to reconfiguration of an RRC connection in E-UTRA in FIG. 4. Not only in the figures of FIG. 7 and FIG. 8, but also in examples of the ASN.1 according to the present embodiment, <omitted> and <partly omitted> are not a part of the notation of the ASN.1 and indicate that other information is omitted at these positions. Note that there may also be omitted information elements in a part where neither <omitted> nor <partly omitted> is indicated. Note that, in the present embodiment, the examples of the ASN.1 do not correctly comply with the ASN.1 notation method. In the present embodiment, the examples of the ASN.1 are notations of examples of parameters of the RRC signalling according to the present embodiment, and other terms and other notations may be used. The examples of ASN.1 correspond to only examples related to main information closely associated with the present embodiment in order to avoid complicated description. Note that the parameters notated in ASN.1 may all be referred to as information elements without distinction between fields, information elements, or the like. In the present embodiment, fields, information elements, and the like notated in ASN.1 included in the RRC signalling may be replaced with information, or may be replaced with parameters. Note that the message related to reconfiguration of RRC connection may be an RRC reconfiguration message in NR or an RRC connection reconfiguration message in E-UTRA.

An information element named CellGroupConfig in FIG. 7 may be an information element used for configuration, change, release, and the like of the cell group of the MCG or SCG in NR. The information element named CellGroupConfig may be replaced with a cell group configuration information element or a cell group configuration. An information element named SpCellConfig included in the information element named CellGroupConfig may be an information element used for configuration of a special cell (SpCell). The information element named SpCellConfig may be replaced with an SpCell configuration information element or an SpCell configuration. An information element named SCellConfig included in the information element named CellGroupConfig may be an information element used for configuration of a secondary cell (SCell). The information element named SCellConfig may be replaced with an SCell configuration information element or an SCell configuration. Note that an information element referred to as ReconfigurationWithSync included in the information element named SpCellConfig may be a reconfiguration with synchronization information element, or a reconfiguration with synchronization. A new UE identifier named newUE-Identity may be included in the information element named ReconfigurationWithSync. An information element named spCellConfigCommon included in the information element named ReconfigurationWithSync may be an information element indicating a common configuration in SpCell. The information element named spCellConfigCommon may be replaced with SpCell common configuration. An information element named sCellConfigCommon included in the information element named SCellConfig may be an information element indicating a common configuration in SpCell. The information element named sCellConfigCommon may be replaced with an SCell common configuration.

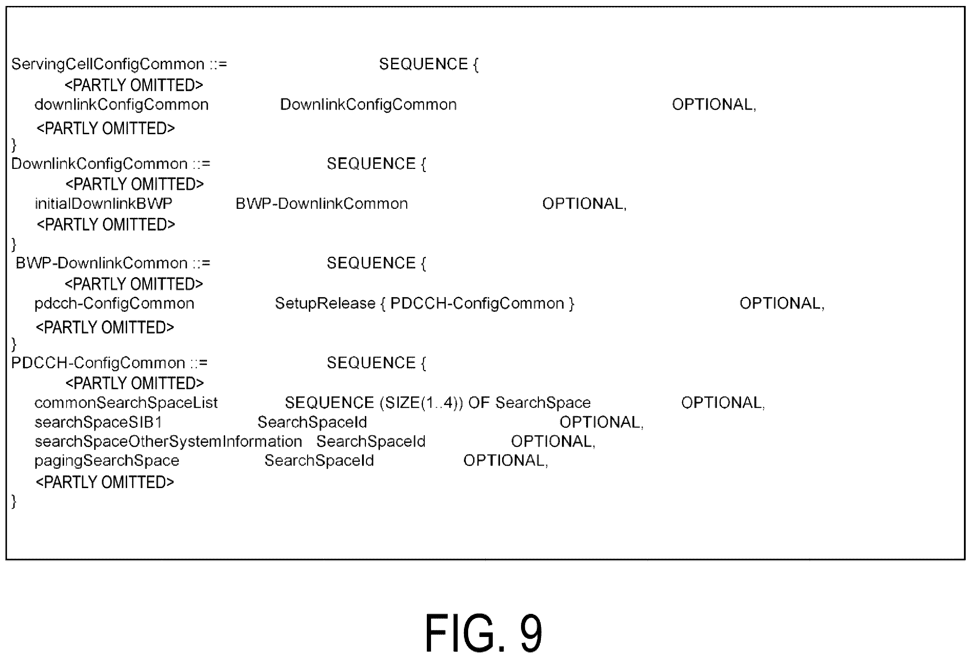

FIG. 9 is an example of ASN. 1 notation indicating an information element named ServingCellConfigCommon included in the SpCell configuration or the SCell configuration in FIG. 7, i.e., a field and/or an information element related to the serving cell common configuration. An information element named DownlinkConfigCommon included in the information element named ServingCellConfigCommon may be an information element indicating a common configuration in downlink. The information elements named DownlinkConfigCommon may be replaced with a downlink common configuration. An information element named BWP-DownlinkCommon included in the information element named DownlinkConfigCommon may be an information element indicating a common configuration in a downlink BWP. The information elements named BWP-DownlinkCommon may be replaced with a downlink BWP common configuration. An information element named PDCCH-ConfigCommon included in the information element named BWP-DownlinkCommon may be an information element indicating a common configuration in the PDCCH. An information element named PDCCH-ConfigCommon may be replaced with a PDCCH common configuration. The information element named PDCCH-ConfigCommon may include an information element named commonSearchSpaceList, an information element named searchSpaceSIB1, an information element named searchSpaceOtherSystemInformation, and/or an information element named pagingSearchSpace. The information element named commonSearchSpaceList may refer to a list of common search spaces (CSSs). The information element named searchSpaceSIB1 may refer to information of a search space for receiving system information (SIB1). The searchSpaceOtherSystemInformation may include information of a search space for receiving system information (SIB2 and beyond). The information element named pagingSearchSpace may refer to information of a search space for receiving a paging message.

An RRC reconfiguration procedure will be described. The RRC reconfiguration procedure may refer to a procedure for reconfiguring parameters, information elements, or the like configured in the RRC. The purpose of the RRC reconfiguration procedure may include some or all of the following (A) to (F):
(A) Modifying an RRC connection;
(B) Performing reconfiguration with synchronization;
(C) Configuring, modifying, and/or releasing measurement;
(D) Adding, modifying, and/or releasing one or more SCells and cell groups;
(E) Adding, modifying, and/or releasing a configuration of a conditional handover (CHO);
(F) Adding, modifying, and/or releasing a configuration of a conditional PSCell change (CPC) or a conditional PSCell addition (CPA).

The base station apparatus (network) may initiate the RRC reconfiguration procedure for the terminal apparatus in the RRC_CONNECTED state. At this time, the base station apparatus may apply some or all of (A) to (F) described below to the RRC reconfiguration procedure. Note that "the base station apparatus initiates the RRC reconfiguration procedure for the terminal apparatus" may be replaced with "the base station apparatus transmits a message related to the reconfiguration of an RRC connection to the terminal apparatus" or the like.
(A) Establishment of a radio bearer other than SRB1;
(B) Addition of the SCG and one or more SCells;
(C) Reconfiguration with synchronization included in cell group configuration for the SCG;
(D) Reconfiguration with synchronization included in a cell group configuration for the MCG;
(E) Conditional reconfiguration (conditionalReconfiguration) for a conditional PSCell change;
(F) Conditional reconfiguration (conditionalReconfiguration) for a conditional handover or a conditional PSCell addition.

The reconfiguration with synchronization with security key update, which is included in the message related to the reconfiguration of an RRC connection, may include some or all of the following (A) to (E), triggered by an explicit layer 2 indicator (L2 indicator):
(A) Random access to the PCell and/or PSCell;
(B) MAC reset;
(C) Security update;
(D) RLC reestablishment;
(E) PDCP reestablishment.

The reconfiguration with synchronization with security key update, included in the message related to the reconfiguration of an RRC connection, may include some or all of the following (A) to (D), triggered by an explicit layer 2 indicator (L2 indicator):
(A) Random access to the PCell and/or PSCell;
(B) MAC reset;
(C) RLC reestablishment;
(D) PDCP data recovery.

Note that the above-described layer 2 indicator may include signalling by layer 2 such as MAC, RLC, and PDCP.

The terminal apparatus may perform some or all of (A) to (E) described below in a case of receiving the message related to the reconfiguration of an RRC connection or in a case of executing the conditional reconfiguration (CHO, CPA, or CPC):
Processing RRP
   (A) In a case that the message related to the reconfiguration of an RRC connection is applied by execution of conditional reconfiguration during performance of cell selection while a timer T311 is running that is started at the initiation of the RRC reestablishment procedure, remove all entries in an entry list described below;
   (B) In a case that the message related to RRC connection reconfiguration includes MCG cell group configuration, perform configuration of a cell group for the received MCG cell group configuration, and in a case that the cell group configuration includes the SpCell configuration with the reconfiguration with synchronization information element, perform reconfiguration with synchronization;
   (C) In a case that the message related to RRC connection reconfiguration includes SCG cell group configuration, perform cell group configuration for the SCG, and in a case that the cell group configuration includes SpCell configuration with reconfiguration with synchronization information element, perform reconfiguration with synchronization;
   (D) In a case that the message related to the reconfiguration of an RRC connection includes a conditional reconfiguration (conditionalReconfiguration), perform the conditional reconfiguration;
   (E) Submit an RRC reconfiguration complete message to lower layers (PHY, MAC, etc.) for transmission using the new configuration.
   The terminal apparatus may perform some or all of (A) to (E) described below in order to execute the reconfiguration with synchronization. "Execute reconfiguration with synchronization" may be replaced as "perform reconfiguration with synchronization" or "trigger reconfiguration with synchronization".
Processing RWS:
   (A) Stop a timer T310 for the corresponding SpCell in a case that the timer T310 is running;
   (B) Stop a timer T312 for the corresponding SpCell in a case that the timer T312 is running;
   (C) Reset the MAC entity of the corresponding cell group;
   (D) Apply the value of a new UE identity (newUE-Identity) included in the reconfiguration with synchronization information element as the C-RNTI for the corresponding cell group;
   (E) Configure lower layers (such as PHY) according to the received SpCell common configuration.

Now, the conditional reconfiguration will be described. The conditional reconfiguration may refer to a conditional handover, a conditional PSCell addition, and/or a conditional PSCell change. The network configures one or more target candidate cells for the conditional reconfiguration for the terminal apparatus. The terminal apparatus evaluates the state of the configured candidate cell. The terminal apparatus performs the evaluation and applies a conditional reconfiguration information element associated with the candidate cell that satisfies an execution condition. The terminal apparatus may store a list (VarConditionalReconfig) of entries to be described later for the conditional reconfiguration.

Based on the reception of information related to the conditional reconfiguration, the terminal apparatus may perform an operation of removing a target candidate cell for the conditional reconfiguration in a case that the information related to the conditional reconfiguration includes an entry remove list (condReconfigToRemoveList), and may perform an operation of adding or modifying the target candidate cell for the conditional reconfiguration in a case that the information related to the conditional reconfiguration includes an entry add/modify list (condReconfigToAddModList).

The operation of removing the target candidate cell for the conditional reconfiguration may be an operation in which, in a case that the list of entries stored in the terminal apparatus includes the identifier (condReconfigId) of an entry included in the entry remove list, the terminal apparatus removes the entry corresponding to the identifier of the entry from the list of entries stored in the terminal apparatus. Note that, in the description below, the list of entries held by a terminal apparatus is also simply referred to as an entry list. That is, the "entry list" in the following description refers to the list of entries stored in the terminal apparatus unless otherwise specified. The entry list may be a variable named VarConditionalReconfig. The identifier of an entry is also simply referred to as an entry identifier.

The operation of adding or modifying the target candidate cell for the conditional reconfiguration may be an operation in which, in a case that each entry identifier included in the entry add/modify list is present in the entries in the entry list, the terminal apparatus performs the following processing (A) and/or (B):
(A) In a case that an entry included in the entry add/modify list includes an execution condition (condExecutionCond), replace the execution condition for the entry in the entry list that matches the entry identifier of the entry with the execution condition for the entry included in the entry add/modify list;
(B) In a case that an entry included in the entry add/modify list includes a conditional reconfiguration information element (condRRCReconfig), replace the conditional reconfiguration information element of the entry list that matches the entry identifier of the entry with the conditional reconfiguration information element included in the entry add/modify list.

In a case that the entry list does not include any of the entry identifiers included in the entry add/modify list, the terminal apparatus may add, to the entry list, a new entry corresponding to the entry identifier not included in the entry list.

Note that the entry remove list may be a list related to configurations of one or more candidate SpCells to be removed. The entry add/modify list may be a list related to the configurations of one or more candidate SpCells to be added and modified for CHO, CPC and CPA. Each entry included in the entry add/modify list includes an entry identifier, and may additionally include an execution condition and/or a conditional reconfiguration information element. Each entry may be associated with one candidate SpCell of the one or more candidate SpCells. The entry identifier is an identifier used to identify entries for CHO, CPA, and CPC. The entry list may include one or more entries. Each entry may include one entry identifier, one or more execution conditions, and one conditional reconfiguration information element. In a case that the entry list stored in the terminal apparatus includes no entry, the terminal apparatus may store an empty list. The execution condition may be a condition that needs to be satisfied in order to trigger execution of the conditional reconfiguration. The conditional reconfiguration information element may be a message related to the reconfiguration of an RRC connection applied in a case that the execution condition is satisfied. The message related to the reconfiguration of an RRC connection may be a message used to connect to a candidate SpCell.

The terminal apparatus may evaluate the execution condition of the entry included in the entry list stored in the terminal apparatus. In a case that the entry list stored in the terminal apparatus is empty or in a case that the entry list is not stored, the execution condition need not be evaluated.

Executing the conditional reconfiguration may be applying, in a case that the one or more execution conditions are satisfied, a conditional reconfiguration information element included in the same entry as that with the one or more execution conditions and executing the RRC reconfiguration procedure based on the conditional reconfiguration information element.

In a case that multiple candidate cells satisfy the execution condition, the terminal apparatus may select one cell from among the multiple candidate cells that satisfy the execution condition and apply the conditional reconfiguration information element associated with the selected candidate cell.

In a case that reset of the MAC entity is requested by a higher layer (RRC or the like), the MAC entity of the terminal apparatus may perform some or all of (A) to (O) described below. The reset of the MAC entity may be replaced with MAC reset. Processing in which the MAC entity of the terminal apparatus performs some of (A) to (O) described below may be replaced with partial MAC reset or with processing of partially resetting the MAC entity. "Partially resetting the MAC entity" may be replaced with "indicating to (instructing) the MAC entity to perform partial reset" or the like.

### Processing MR:

(A) Initialize a parameter Bj configured for each logical channel to 0;
(B) Stop all timers in a case that the timers are running;
(C) Set the values of New Data Indicators (NDIs) of all uplink HARQ processes to 0;
(D) Stop a random access procedure in progress, if any;
(E) Discard explicitly signalled four-step and two-step RA-type contention-free Random Access (CFRA) resources, if any;
(F) Flush a buffer of Msg3;
(G) Flush a buffer of MSGA;
(H) Cancel a triggered SR procedure, if any;
(I) Cancel a triggered BSR procedure, if any;
(J) Cancel a triggered PHR procedure, if any;
(K) Cancel confirmation of a triggered configured uplink grant, if any;
(L) Flush soft buffers for all downlink HARQ processes;
(M) In each downlink HARQ process, consider the next received transmission for a certain transport block (TB) to be the very first transmission;
(N) Release a Temporary C-RNTI, if any;
(O) Reset all BFI_COUNTERs.

A Multiple Transmit/Receive Point (also referred to as multi-TRP or mTRP) operation will be described.

In the mTRP operation, a serving cell may be able to schedule a terminal apparatus from multiple Transmit/Receive Points (TRPs) to provide better coverage, reliability and/or data rates for the PDSCH, PDCCH, PUSCH, and PUCCH.

There may be two different operation modes for scheduling mTRP PDSCH transmission. The two operation modes may be single-DCI and multi-DCI. Control of uplink and downlink operations for both modes may be performed by the PHY and MAC layers using configurations provided by the RRC layer. In the single-DCI mode, the terminal apparatus may be scheduled for both TRPs by the same DCI. In the multi-DCI mode, the terminal apparatus may be scheduled for each TRP by independent DCI.

Each TRP of the mTRP may be identified by TRP information. For example, the TRP information may be information for specifying one TRP among one or more TRPs. For example, the TRP information may be an index for specifying one TRP. For example, one TRP may be determined based on the TRP information. For example, the TRP information may be information for specifying one or multiple TRPs. The TRP information may be used to select one TRP. The TRP information may be a CORESET pool index. One CORESET may be associated with one CORESET pool index and one CORESET resource set identifier. The terminal apparatus may transmit the PUSCH at the corresponding TRP based on the CORESET resource set identifier. The TRP information may be associated with an index of the CORESET resource pool. For example, a first CORESET pool index may be associated with a first TRP and a second CORESET pool index may be associated with a second TRP. The TRP information may be associated with a TCI state pool (or an index of the TCI state pool). For example, a first TCI state pool (or pool index) may be associated with a first TRP and a second TCI state pool (or pool index) may be associated with a second TRP.

There may be two different modes of operation for scheduling the mTRP PDCCH transmission. The two operation modes may be PDCCH repetition and single frequency network (SFN) based PDCCH transmission. In both modes, the terminal apparatus may receive each of the PDCCH transmissions carrying the same DCI from a respective one of the TRPs. In the PDCCH repetition mode, the terminal apparatus may receive two PDCCH transmissions carrying the same DCI from two linked search spaces each associated with different CORESETs. In the SFN-based PDCCH transmission mode, the terminal apparatus can receive two PDCCH transmissions carrying the same DCI from a single search space/CORESET using different TCI states.

In the mTRP PUSCH repetition, due to a single piece of DCI or an indication by a configured uplink grant based on RRC signalling, the terminal apparatus may perform PUSCH transmissions of the same content in beam directions associated with different spatial relations corresponding to the two TRPs.

In inter-cell mTRP operation, one or more TCI states in a multi-DCI PDSCH transmission may be associated with an SSB of a Physical Cell Identity (PCI) that is different from the PCI of the serving cell. Up to one TCI state associated with a PCI different from the PCI of the serving cell may be activated at a time.

Now, a central unit (CU) and a distributed unit (DU) will be described. The central unit may refer to a logical node hosting the RRC layer, the SDAP layer, and the PDCP layer of the base station apparatus. The distributed unit may refer to a logical node hosting the RLC layer, the MAC layer, and the PHY layer of the base station apparatus. The central unit may control the operation of one or more distributed units. One distributed unit may support one or more cells, and one cell may be supported by only one distributed unit. In other words, one distributed unit may be associated with one or more cells.

Now, layer 1/layer 2 mobility (L1/L2 mobility) in the present embodiment will be described. The layer 1/layer 2 mobility may refer to a procedure in which the base station apparatus indicates the terminal apparatus to change one or more serving cells through the DCI or the MAC control element for causing the terminal apparatus to specify one or multiple cells which are targets (change destinations) of the serving cell. Additionally or alternatively, the layer 1/layer 2 mobility may refer to a procedure in which the terminal apparatus changes the serving cell to one or more cells indicated in the DCI or the MAC control element received from the base station apparatus, the DCI or MAC control element for causing the terminal apparatus to specify the one or more cells targeted as the serving cell. The DCI for causing the terminal apparatus to specify one or more cells targeted as the serving cell may be DCI indicating one or more cells targeted as the serving cell of the terminal apparatus to be changed by the base station apparatus. Similarly, the MAC control element for causing the terminal apparatus to specify the one or more cells targeted as the serving cell may be a MAC control element indicating the one or more target cells of the serving cell of the terminal apparatus to be changed by the base station apparatus. The DCI and the MAC control element that cause the terminal apparatus to specify one or more cells targeted as the serving cell may include other information indicating that the serving cell is changed. In the layer 1/layer 2 mobility, the base station apparatus may indicate the terminal apparatus to change one or more serving cells through the DCI or the MAC control element for causing the terminal apparatus to specify one or more cells targeted as the serving cell based on one or more measurement reports received from the terminal apparatus. The "layer 1/layer 2 mobility" may be replaced with "layer 1/layer 2 based inter-cell mobility (L1/L2 based inter-cell mobility)", "layer 1/layer 2 inter-cell mobility (L1/L2 inter-cell mobility)", "layer 1/layer 2 serving cell change processing", "layer 1/layer 2 serving cell change", "layer 1/layer 2 handover", or the like. "DCI for causing the terminal apparatus to specify one or more cells targeted as the serving cell" may be replaced with "DCI indicating a change of the serving cell to one or more target cells", "DCI for changing one or more serving cells of the terminal apparatus", or the like. "MAC control element for causing the terminal apparatus to specify one or more cells targeted as the serving cell" may be replaced with "MAC control element indicating a change of the serving cell to one or more target cells", "MAC control element for changing one or more serving cells of the terminal apparatus", or the like. The DCI may be replaced with layer 1 signalling or the like, and the MAC control element may be replaced with layer 2 signalling or the like. Layer 1 may refer to the PHY layer, and layer 2 may be one of the MAC layer, the RLC layer, the PDCP layer, and the SDAP layer. The above-described measurement may be performed by layer 1 and/or layer 3, that is, the RRC layer.

In the layer 1/layer 2 mobility, candidates for one or more cells targeted as the serving cell of the terminal apparatus to be changed by the base station apparatus may be referred to as candidate cells (candidate cells), or may be referred to as candidate target cells or other names. In the layer 1/layer 2 mobility, one or more candidate cells may be configured in the terminal apparatus by the base station apparatus before the terminal apparatus changes one or more serving cells to one or more cells targeted. In the layer 1/layer 2 mobility, the candidate cell may be an SpCell or an SCell. In the layer 1/layer 2 mobility, a group (a set of cells) of one or multiple cell candidates targeted as the serving cell of the terminal apparatus to be changed by the base station apparatus may be referred to as a candidate cell group (CCG), or may be referred to as any other name such as a candidate cell set or a configured cell set. In the layer 1/layer 2 mobility, the CCG may be a group of some or all cells included in the MCG or the SCG. In the layer 1/layer 2 mobility, one or more CCGs may be configured for the terminal apparatus by the base station apparatus before the terminal apparatus changes one or more serving cells to one or more cells targeted. In the layer 1/layer 2 mobility, the candidate target may be the above-described candidate cell, or may be the above-described CCG. Additionally or alternatively, in the layer 1/layer 2 mobility, candidate targets may include both candidate cells and CCGs described above. In the layer 1/layer 2 mobility, the one or more cells targeted may be one or more candidate cells configured for the terminal apparatus and/or one or more cells specified by the DCI or the MAC control element for causing the terminal apparatus to specify the one or more cells targeted as the serving cell from among one or more CCGs configured for the terminal apparatus.

In the layer 1/layer 2 mobility, a configuration indicating information of one or more candidate cells and/or one or more CCGs provided by the base station apparatus to the terminal apparatus may be referred to as a layer 1/layer 2 inter-cell mobility candidate target configuration (L1/L2 inter-cell mobility candidate target configuration), or may be referred to as any other name such as a candidate target configuration, a configuration of a candidate target, a configuration of a candidate cell, or a configuration of a CCG. Additionally or alternatively, in the layer 1/layer 2 mobility, the layer 1/layer 2 inter-cell mobility candidate target configuration may be a configuration provided by the base station apparatus to the terminal apparatus and indicating information of one or more candidate targets. In the layer 1/layer 2 mobility, the layer 1/layer 2 inter-cell mobility candidate target configuration may include configurations of one or more candidate targets and may include configurations of measurements and/or radio bearers applied to the one or more candidate targets. In the layer 1/layer 2 mobility, the base station apparatus may prepare one or more candidate cells and provide the terminal apparatus with a layer 1/layer 2 inter-cell mobility candidate target configuration including configurations of the candidate cells. At this time, in a case that the terminal apparatus receives the layer 1/layer 2 inter-cell mobility candidate target configuration, the terminal apparatus may initiate measuring and reporting the candidate cells to the base station apparatus. Additionally or alternatively, in the layer 1/layer 2 mobility, the base station apparatus may prepare one or more CCGs and provide the terminal apparatus with a layer 1/layer 2 inter-cell mobility candidate target configuration including configurations of the CCGs. At this time, in a case that the terminal apparatus receives the layer 1/layer 2 inter-cell mobility candidate target configuration, the terminal apparatus may initiate measuring and reporting each candidate cell of the CCG to the base station apparatus. For example, in the layer 1/layer 2 mobility, the base station apparatus may notify the terminal apparatus of information indicating any of the candidate cells or any of the CCGs in the DCI for changing one or more serving cells of the terminal apparatus to cause the terminal apparatus to change the one or more serving cells. For example, in the layer 1/layer 2 mobility, the base station apparatus may notify the terminal apparatus of information indicating any of the candidate cells or any of the CCGs in the MAC control element for changing one or more serving cells of the terminal apparatus to cause the terminal apparatus to change the one or more serving cells.

In the layer 1/layer 2 mobility, some or all of the mobility scenarios (A) to (C) described below may be supported, or any other mobility scenario may be supported. For the terminal apparatus not configured with CA, in the mobility scenario (A) described below, only the PCell is changed, or for the terminal apparatus configured with CA, in the mobility scenario (A) described below, the PCell and one or more SCells may be changed.
(A) PCell change;
(B) Intra-distributed unit (intra-DU) mobility and intra-central unit inter-distributed unit (intra-CU-inter-DU) mobility;
(C) Inter-cell beam management.

In the layer 1/layer 2 mobility, the following principle (A) and/or (B) may be applied:
(A) The base station apparatus prepares a layer 1/layer 2 inter-cell mobility candidate target configuration such that the base station apparatus can perform dynamic switching without the need for full configuration;
(B) The user plane communicates continuously while avoiding reset wherever possible in order to avoid data loss and additional delay for data recovery.

In the layer 1/layer 2 mobility, the terminal apparatus may be notified of the layer 1/layer 2 inter-cell mobility candidate target configuration in advance by RRC signalling in (A) to (C) described below or any other control information (RRC signalling or the like), and the terminal apparatus may store the layer 1/layer 2 inter-cell mobility candidate target configuration until the terminal apparatus receives, from layer 1 or layer 2, DCI or a MAC control element indicating that the serving cell is changed to one or more cells targeted. Between the intra-distributed unit mobility and the intra-central unit inter-distributed unit mobility, the layer 1/layer 2 inter-cell mobility candidate target configuration may be common or partially different. The layer 1/layer 2 inter-cell mobility candidate target configuration may include a part or all of system information (searchSpaceSIB 1, searchSpaceOtherSystemInformation, or the like), a paging message (pagingSearchSpace, or the like), and a common search space (commonSearchSpaceList, or the like). In the layer 1/layer 2 mobility, security key update need not be performed.
(A) Message related to the reconfiguration of an RRC connection for each candidate target;
(B) Cell group configuration for each candidate target;
(C) SpCell configuration or SCell configuration for each candidate target.

Handover interruption time (HO interruption time) for the layer 1/layer 2 mobility may refer to a period of time from the time when the terminal apparatus receives, from layer 1 or layer 2, DCI or a MAC control element indicating that the serving cell is changed to one or more cells targeted, to the time when the terminal apparatus performs downlink/uplink transmission and/or reception for the first time in a beam of the one or more target cells. The handover interruption time for the layer 1/layer 2 mobility may include the time for processing some or all of (A) to (F) described below. The "handover interruption time for layer 1/layer 2 mobility" may be replaced with "delay for the layer 1/layer 2 mobility" or the like.
(A) UE reconfiguration;
(B) Measurement in layer 1 and/or RRC;
(C) Downlink synchronization;
(D) Uplink synchronization;
(E) TRS (Temporary RS) tracking;
(F) CSI-RS measurement.

Based on the above description, various examples of the present embodiment will be described. Note that the processing described in the above may be applied to each processing not described in the following.

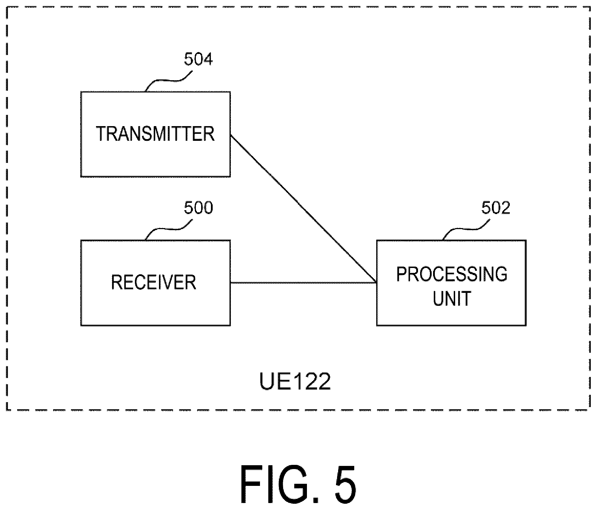

FIG. 5 is a block diagram illustrating a configuration of the terminal apparatus (UE 122) according to the present embodiment. Note that FIG. 5 illustrates only the main components closely related to the present embodiment in order to avoid complexity of description.

The UE 122 illustrated in FIG. 5 includes a receiver 500 that receives control information (DCI, RRC signalling, and the like) from the base station apparatus, the processing unit 502 that performs processing in accordance with parameters) included in the received control information, and the transmitter 504 that transmits control information (UCI, RRC signalling, and the like) to the base station apparatus. The base station apparatus described above may be the eNB 102, or may be the gNB 108. The processing unit 502 may include a part or all of functions of various layers (for example, the physical layer, the MAC layer, the RLC layer, the PDCP layer, the SDAP layer, the RRC layer, and the NAS layer). In other words, the processing unit 502 may include a part or all of a physical layer processing unit, a MAC layer processing unit, an RLC layer processing unit, a PDCP layer processing unit, an SDAP processing unit, an RRC layer processing unit, and a NAS layer processing unit.

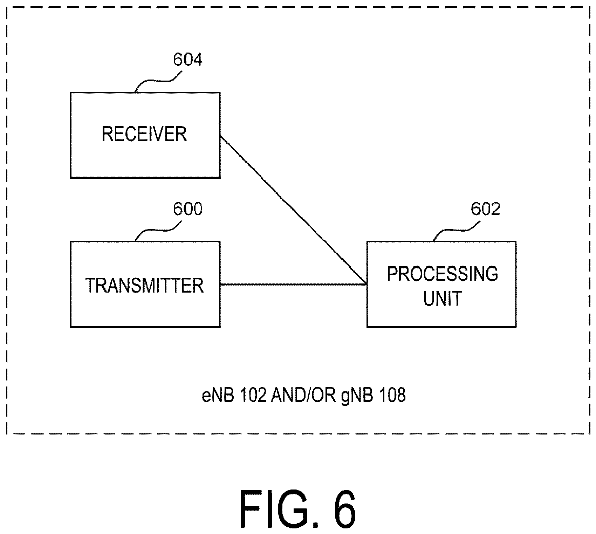

FIG. 6 is a block diagram illustrating a configuration of the base station apparatus according to the present embodiment. Note that FIG. 6 illustrates only the main components closely related to the present embodiment in order to avoid complexity of description. The base station apparatus described above may be the eNB 102, or may be the gNB 108.

The base station apparatus illustrated in FIG. 6 includes a transmitter 600 that transmits control information (DCI, RRC signalling, and the like) to the UE 122, a processing unit 602 that creates control information (DCI, RRC signalling including parameters, and the like) and transmits the control information to the UE 122 to thereby cause the processing unit 502 of the UE 122 to perform processing, and a receiver 604 that receives control information (UCI, RRC signalling, and the like) from the UE 122. The processing unit 602 may include a part or all of functions of various layers (for example, the physical layer, the MAC layer, the RLC layer, the PDCP layer, the SDAP layer, the RRC layer, and the NAS layer). In other words, the processing unit 602 may include a part or all of a physical layer processing unit, a MAC layer processing unit, an RLC layer processing unit, a PDCP layer processing unit, an SDAP processing unit, an RRC layer processing unit, and a NAS layer processing unit.

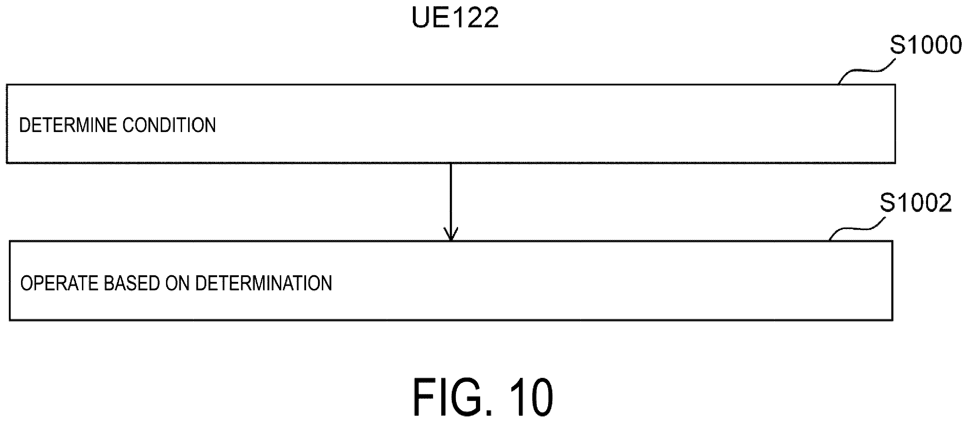

With reference to FIG. 10, an example of processing of the terminal apparatus according to the present embodiment will be described.

FIG. 10 is a diagram illustrating an example of processing of the terminal apparatus according to the present embodiment. In a case of receiving the MAC control element from the transmitter 600 of the gNB 108, the RRC 308 of the processing unit 502 of the UE 122 determines the condition (step S1000) and operates based on the determination (step S1002).

The RRC 308 of the processing unit 502 of the UE 122 may determine whether any one or any combination of the following (a) to (e) is satisfied in step S1000:
(a) The MAC control element received from the transmitter 600 of the gNB 108 is a MAC control element that indicates that the serving cell is to be changed to one or more cells targeted;
(b) The MAC control element received from the transmitter 600 of the gNB 108 includes information indicating that the MAC entity is reset in a case of the serving cell change;
(c) The MAC control element received from the transmitter 600 of the gNB 108 includes information for indicating to the MAC entity to perform partial reset in a case of the serving cell change;
(d) The MAC control element received from the transmitter 600 of the gNB 108 includes information indicating that the RLC entity is reestablished in a case of the serving cell change;
(e) The MAC control element received from the transmitter 600 of the gNB 108 including information indicating that the PDCP entity is reestablished in a case of the serving cell change.

In a case of determining in step S1000 that the condition (a) is satisfied, the RRC 308 of the processing unit 502 of the UE 122 may change the serving cell to the one or more cells targeted in step S1002, and in a case of determining in step S1000 that the condition (a) is not satisfied, the RRC 308 of the processing unit 502 of the UE 122 need not change the serving cell to the one or more cells targeted in step S1002. In a case of determining in step S1000 that the condition (b) is satisfied, the RRC 308 of the processing unit 502 of the UE 122 may reset the MAC entity in a case of the serving cell change in step S1002. At this time, in step S1002, the MAC 302 of the processing unit 502 of the UE 122 may perform a part or all of the processing as illustrated in the above-described processing (MR) in a case of the serving cell change. In a case of determining in step S1000 that the condition (b) is not satisfied, the RRC 308 of the processing unit 502 of the UE 122 need not reset the MAC entity in a case of the serving cell change in step S1002. At this time, in step S1002, the MAC 302 of the processing unit 502 of the UE 122 need not perform a part or all of the processing as illustrated in the above-described processing (MR) in a case of the serving cell change. In a case of determining in step S1000 that the condition (c) is satisfied, the RRC 308 of the processing unit 502 of the UE 122 may indicate to the MAC entity to perform partial reset in a case of the serving cell change in step S1002. At this time, in step S1002, the MAC 302 of the processing unit 502 of the UE 122 may perform part of the processing as illustrated in the above-described processing (MR) in a case of the serving cell change. In a case of determining in step S1000 that the condition (c) is not satisfied, the RRC 308 of the processing unit 502 of the UE 122 need not indicate to the MAC entity to perform partial reset in a case of the serving cell change in step S1002. At this time, in step S1002, the MAC 302 of the processing unit 502 of the UE 122 need not perform a part or all of the processing as illustrated in the above-described processing (MR) in a case of the serving cell change. In a case of determining in step S1000 that the condition (d) is satisfied, the RRC 308 of the processing unit 502 of the UE 122 may reestablish the RLC entity in a case of the serving cell change in step S1002, and in a case of determining in step S1000 that the condition (d) is not satisfied, the RRC 308 of the processing unit 502 of the UE 122 need not reestablish the RLC entity in a case of the serving cell change in step S1002. In a case of determining in step S1000 that the condition (e) is satisfied, the RRC 308 of the processing unit 502 of the UE 122 may reestablish the PDCP entity in a case of the serving cell change in step S1002, and in a case of determining in step S1000 that the condition (e) is not satisfied, the RRC 308 of the processing unit 502 of the UE 122 need not reestablish the PDCP entity in a case of the serving cell change in step S1002. The MAC control elements described in the above conditions (a) to (e) may be common to multiple conditions or may be independent from each other.

With reference to FIG. 10, another example of processing of the terminal apparatus according to the present embodiment will be described. The RRC 308 of the processing unit 502 of the UE 122 to which a change of the serving cell to one or more cells targeted is indicated from a lower layer (layer 1 or layer 2) of a certain cell group including at least one SpCell determines the condition (step S1000) and operates based on the determination (step S1002).

The RRC 308 of the processing unit 502 of the UE 122 may determine in step S1000 whether the configurations of candidate targets are stored, and in a case of determining that the configurations of candidate targets are stored, may determine whether one or both of (a) and (b) described below are satisfied. In a case of determining that no configurations of candidate targets are stored, the RRC 308 of the processing unit 502 of the UE 122 need not change the serving cell to the one or more cells targeted in step S1002.
(a) The configurations of candidate targets include information #A.
(b) The configurations of candidate targets include information #B.

The information #A may include any one of or any combination of the following (a-1) to (a-4), and may include any other information:
(a-1) Information indicating that the MAC entity is reset in a case of the serving cell change;
(a-2) Information for indicating to the MAC entity to perform partial reset in a case of the serving cell change;
(a-3) Information indicating that the RLC entity is reestablished in a case of the serving cell change;
(a-4) Information indicating that the PDCP entity is reestablished in a case of the serving cell change.

In a case that the RRC 308 of the processing unit 502 of the UE 122 determines in step S1000 that the condition (a) is satisfied and that the information #A includes the information (a-1) described above, the RRC 308 of the processing unit 502 of the UE 122 may perform processing (a'-1) described below in step S1002, and in a case that the information #A does not include the information (a-1), the RRC 308 of the processing unit 502 of the UE 122 need not perform the processing (a'-1) in step S1002. In a case that the RRC 308 of the processing unit 502 of the UE 122 determines in step S1000 that the condition (a) is satisfied and that the information #A includes the information (a-2) described above, the RRC 308 of the processing unit 502 of the UE 122 may perform processing (a'-2) described below in step S1002, and in a case that the information #A does not include the information (a-2), the RRC 308 of the processing unit 502 of the UE 122 need not perform the processing (a'-2) in step S1002. In a case that the RRC 308 of the processing unit 502 of the UE 122 determines in step S1000 that the condition (a) is satisfied and that the information #A includes the information (a-3) described above, the RRC 308 of the processing unit 502 of the UE 122 may perform processing (a'-3) described below in step S1002, and in a case that the information #A does not include the information (a-3), the RRC 308 of the processing unit 502 of the UE 122 need not perform the processing (a'-3) in step S1002. In a case that the RRC 308 of the processing unit 502 of the UE 122 determines in step S1000 that the condition (a) is satisfied and that the information #A includes the information (a-4) described above, the RRC 308 of the processing unit 502 of the UE 122 may perform processing (a'-4) described below in step S1002, and in a case that the information #A does not include the information (a-4), the RRC 308 of the processing unit 502 of the UE 122 need not perform the processing (a'-4) in step S1002. In a case that the RRC 308 of the processing unit 502 of the UE 122 determines in step S1000 that the condition (a) is satisfied and that the information #A includes any other information, the RRC 308 of the processing unit 502 of the UE 122 may perform processing other than the processing (a'-1) to (a'-4) in step S1002. The processing operations (a'-1) to (a'- 4) may be combined with one another. The processing (a'-1) may be, for example, a part or all of the processing illustrated in the above-described processing (MR), and the processing (a'-2) may be, for example, a part or all of the processing illustrated in the above-described processing (MR).
(a'-1) Reset the MAC entity of the cell group in a case of the serving cell change;
(a'-2) Indicate to the MAC entity of the cell group to perform partial reset in a case of the serving cell change;
(a'-3) Reestablish the RLC entity in a case of the serving cell change;
(a'-4) Reestablish the PDCP entity in a case of changing the serving cell change.

The information #B may include any one of or any combination of the following (b-1) and (b-2), and may include any other information:
(b-1) Information indicating a group to which each candidate target belongs;
(b-2) List information of candidate targets.

In a case that the RRC 308 of the processing unit 502 of the UE 122 determines in step S1000 that the condition (b) is satisfied and that the information #B includes the information (b-1) described above, the RRC 308 of the processing unit 502 of the UE 122 may determine whether to perform a part or all of the processing (a'-1) to (a'-4) based on the information (b-1). For example, in a case that one or more cells targeted, the one or more cells being indicated by the lower layer, belong to the same group as that of some or all of the cells before the serving cell change, the RRC 308 of the processing unit 502 of the UE 122 may determine in step S1000 that a part or all of the processing (a'-1) to (a'-4) described above is not to be performed, and need not perform a part or all of the processing (a'-1) to (a'-4) based on the determination in step S1002. In a case that one or more cells targeted, the one or more cells being indicated by the lower layer, belong to a group different from that of some or all of the cells before the serving cell change, the RRC 308 of the processing unit 502 of the UE 122 may determine in step S1000 that a part or all of the processing (a'-1) to (a'-4) described above is to be performed, and may perform a part or all of the processing (a'-1) to (a'-4) based on the determination in step S1002. Note that the information (b-1) described above may be, for example, an identifier indicating a group to which each candidate target belongs. Alternatively, the above information (b-1) may be list information of candidate targets belonging to each group. For example, the terminal apparatus may determine that the list information associated with each group includes the identifier for identifying each candidate cell and that the candidate cells having the identifiers included in the list information of the same group belong to the same group. The group described in the information (b-1) may be configured by the gNB 108 based on any one of or any combination of the following (b-1-1) to (b-1-6):
(b-1-1) Distributed unit supporting each candidate target in the same central unit;
(b-1-2) Whether the MAC entity of the cell group needs to be reset in a case of the serving cell change;
(b-1-3) Whether partial reset needs to be indicated to be performed on the MAC entity of the cell group in a case of the serving cell change;
(b-1-4) Whether the RLC entity needs to be reestablished in a case of the serving cell change;
(b-1-5) Whether the PDCP entity needs to be reestablished in a case of the serving cell change;
(b-1-6) Any other condition.

In a case that the RRC 308 of the processing unit 502 of the UE 122 determines in step S1000 that the condition (b) is satisfied and that the information #B includes the information (b-2) described above, the RRC 308 of the processing unit 502 of the UE 122 may determine whether to perform a part or all of the processing (a'-1) to (a'-4) based on the information (b-2). For example, in a case that the information (b-2) includes a configuration corresponding to one or more cells targeted, the one or more cells being indicated by the lower layer, the RRC 308 of the processing unit 502 of the UE 122 may determine in step S1000 that a part or all of the processing (a'-1) to (a'-4) described above is not to be performed, and need not perform a part or all of the processing (a'-1) to (a'-4) based on the determination in step S1002. In a case that the information (b-2) does not include the configuration corresponding to one or more cells targeted, the one or more cells being indicated by the lower layer, the RRC 308 of the processing unit 502 of the UE 122 may determine in step S1000 that a part or all of the processing (a'-1) to (a'-4) described above is to be performed, and may perform a part or all of the processing (a'-1) to (a'-4) based on the determination in step S1002. The candidate target corresponding to the configuration included in the information (b-2) may be determined by the gNB 108, for example, based on whether the candidate target supports the intra-distributed unit mobility. Additionally or alternatively, the candidate target corresponding to the configuration included in the information (b-2) may be determined by the gNB 108, for example, based on whether the PCI of the candidate target matches a PCI different from that of the serving cell.

In a case of determining in step S1000 that the condition (a) is not satisfied, the RRC 308 of the processing unit 502 of the UE 122 may determine in step S1002 whether to perform a part or all of the processing (a'-1) to (a'-4) described above based on the information other than the information #A. In a case of determining in step S1000 that the condition (b) is not satisfied, the RRC 308 of the processing unit 502 of the UE 122 may determine in step S1002 whether to perform a part or all of the processing (a'-1) to (a'-4) described above based on the information other than the information #B.

The embodiments may be combined with one another. In each embodiment, in a case of determining whether the configurations of candidate targets include the information #A, the RRC 308 of the processing unit 502 of the UE 122 may determine that the configurations of candidate targets do not include the information #A in a case that the configurations of candidate target include information indicating that the processing corresponding to the information #A is not to be performed or information not indicating that the processing corresponding to the information #A is to be performed.

In each embodiment, the information #A and the information #B may be included in the RRC signalling (A) to (D) of the configurations of candidate targets described below or other control information (RRC signalling or the like). Note that, in each embodiment, the list information may be information indicating a list including one or more of the configurations or parameters (A) to (D) described below, and the list may be, for example, an entry list. In each embodiment, the information #A and the information #B may be common or may be indicated independently in the configurations of candidate targets.
(A) Message related to the reconfiguration of an RRC connection for each candidate target
(B) Cell group configuration for each candidate target
(C) SpCell configuration or SCell configuration for each candidate target
(D) Conditional reconfiguration for each candidate target

In each embodiment, the terminal apparatus may store one or more configurations of candidate targets. Additionally or alternatively, the one or more cells targeted, the one or more cells indicated by the lower layer in the serving cell change, may be one or more candidate cells and/or one or more CCGs. Additionally or alternatively, the configurations of candidate targets may include configurations of one or more candidate cells and/or configurations of one or more CCGs. The cell group configuration described above in (B) may include an SpCell configuration and/or an SCell configuration, and the CCG configuration indicated by the lower layer in serving cell change may be applied to the cell group of the lower layer.

Based on NPL 7, in conventional handover, in other words, layer 3 handover, the UE triggers reconfiguration with synchronization. In the layer 1/layer 2 mobility, the MAC entity is reset based on NPL 8 regardless of whether the reconfiguration with synchronization is triggered by the RRC or the DCI or the MAC control element. At this time, some of the configurations of candidate targets may be removed, and the UE may need to acquire the some of the configurations of candidate targets again in the layer 1/layer 2 mobility. According to each of the above-described embodiments, the some of the configurations of candidate targets are not removed by the reconfiguration with synchronization, and the UE may use the some of the configurations of candidate targets without any change in layer 1/layer 2 mobility.

Unless otherwise stated, the radio bearer(s) in the above description may be the DRB, may be the SRB, or may be the DRB and the SRB.

In the above description, expressions such as "user plane", "user plane protocol", and "user plane interface" may be replaced with one another.

In the above description, "receiving DCI or a MAC control element indicating that the serving cell is changed to one or more cells targeted" may be replaced with "being indicated to change the serving cell to one or more cells targeted".

In the above description, expressions such as "candidate target", "candidate cell", and "CCG" may be replaced with each other.

The serving cell change in the above description may be layer 1/layer 2 serving cell change unless otherwise specified.

In the above description, expressions such as "be notified" and "receive an indication" may be replaced with each other.

In the above description, expressions such as "link", "map", and "associate" may be replaced with each other.

In the above description, expressions such as "included", "being included", and "was included" may be replaced with each other.

In the above description, "the" may be replaced with "above-described".

In the above description, expressions such as "determined that", "configured with", and "including" may be replaced with each other.

In the example of each processing or the example of the flow of each processing in the above description, a part or all of the steps need not be performed. In the example of each processing or the example of the flow of each processing in the above description, order of the steps may be different from each other. In the example of each processing or the example of the flow of each processing in the above description, a part or all of the processing in each step need not be performed. In the example of each processing or the example of the flow of each processing in the above description, order of processing in each step may be different from each other. In the above description, "to perform B based on satisfaction of A" may be replaced with "to perform B". In other words, "to perform B" may be performed independently of "satisfaction of A".

Note that in the above description, "A may be replaced with B" may include the meaning that B is replaced with A in addition to replacement of A with B. In a case that the above description contains "C may be D" and "C may be E", this means inclusion of "D may be E." In a case that the above description contains "F may be G" and "G may be H", this may mean inclusion of "F may be H".

In the above description, in a case that a condition "A" and a condition "B" are conflicting conditions, the condition "B" may be expressed as "other" condition of the condition "A".

A program running on an apparatus according to the present embodiment may serve as a program that controls a Central Processing Unit (CPU) and the like to cause a computer to operate in such a manner as to realize the functions of the present embodiment. Programs or pieces of information handled by the programs are temporarily loaded into a volatile memory such as a Random Access Memory (RAM) when processed, or stored in a non-volatile memory such as a flash memory, or a Hard Disk Drive (HDD), and then read, modified, and written by the CPU, as necessary.

Note that the apparatuses in the above-described embodiment may be partially enabled by a computer. In this case, a program for implementing this control function may be implemented by recording the program in a computer-readable recording medium and causing a computer system to read and perform the program recorded in the recording medium. It is assumed that the "computer system" refers to a computer system built into the apparatuses, and the computer system includes an operating system and hardware components such as a peripheral device. Furthermore, the "computer-readable recording medium" may be any of a semiconductor recording medium, an optical recording medium, a magnetic recording medium, and the like.

Moreover, the "computer-readable recording medium" may include a medium that dynamically stores a program for a short period of time, such as a communication line in a case that the program is transmitted via a network such as the Internet or via a communication line such as a telephone line, and a medium that stores the program for a certain period of time, such as a volatile memory inside the computer system that is a server or a client in this case. Furthermore, the above-described program may be configured to realize some of the functions described above, and additionally may be configured to realize the functions described above, in combination with a program already recorded in the computer system.

Furthermore, each functional block or various characteristics of the apparatuses used in the above-described embodiments may be implemented or performed with an electric circuit, that is, typically an integrated circuit or multiple integrated circuits. An electric circuit designed to perform the functions described in the present specification may include a general-purpose processor, a digital signal processor (DSP), an application specific integrated circuit (ASIC), a field programmable gate array (FPGA), or other programmable logic devices, discrete gates or transistor logic, discrete hardware components, or a combination thereof. The general-purpose processor may be a microprocessor, or the processor may be a processor of known type, a controller, a micro-controller, or a state machine instead. The general-purpose processor or the above-mentioned circuits may include a digital circuit, or may include an analog circuit. Furthermore, in a case that with advances in semiconductor technology, a circuit integration technology appears that replaces the present integrated circuits, it is also possible to use an integrated circuit based on the technology.

Note that the present embodiment is not limited to the above-described embodiments. Although apparatuses have been described as an example in the embodiment, the present embodiment is not limited to these apparatuses, and is applicable to a stationary type or a non-movable type electronic apparatus installed indoors or outdoors such as a terminal apparatus or a communication apparatus, for example, an AV device, a kitchen device, a cleaning or washing machine, an air-conditioning device, office equipment, a vending machine, and other household appliances.

Although the present embodiment has been described in detail above referring to the drawings, the specific configuration is not limited to the present embodiment and includes, for example, design changes within the scope that does not depart from the gist of the present embodiment. Furthermore, various modifications are possible within the scope of the present embodiment defined by claims, and embodiments that are made by suitably combining technical means disclosed according to the different embodiments are also included in the technical scope of the present embodiment. In addition, included is a configuration in which components, which are described in the embodiment described above, having similar effects are interchanged.

### Industrial Applicability

An aspect of the present invention can be utilized, for example, in a communication system, communication equipment (for example, a cellular phone apparatus, a base station apparatus, a wireless LAN apparatus, or a sensor device), an integrated circuit (for example, a communication chip), or a program.

### Reference Signs List

100 E-UTRA
102 eNB
104 EPC
106 NR
108 gNB
110 5GC
112, 114, 116, 118, 120, 124 Interface
122 UE
200, 300 PHY
202, 302 MAC
204, 304 RLC
206, 306 PDCP
208, 308 RRC
310 SDAP
210, 312 NAS
500, 604 Receiver
502, 602 Processing unit
504, 600 Transmitter

## Claims

1. A terminal apparatus for communicating with a base station apparatus, the terminal apparatus comprising:
an RRC processing unit, wherein
in a case that a serving cell change to a candidate cell is indicated by a lower layer of a certain cell group,
the RRC processing unit determines, based on a configuration of the candidate cell stored in the RRC processing unit,
whether to reestablish an RLC entity in a case of the serving cell change,
in a case of determining that the RLC entity is to be reestablished in a case of the serving cell change,
the RRC processing unit reestablishes the RLC entity, and
in a case of determining that the RLC entity is not to be reestablished in a case of the serving cell change,
the RRC processing unit does not reestablish the RLC entity.

2. A method for a terminal apparatus for communicating with a base station apparatus, the method comprising the steps of:
in a case that a serving cell change to a candidate cell is indicated by a lower layer of a certain cell group,
determining, by an RRC entity of the terminal apparatus,
whether to reestablish an RLC entity in a case of the serving cell change, based on a configuration of the candidate cell stored in the RRC entity;
in a case of determining that the RLC entity is to be reestablished in a case of the serving cell change,
reestablishing, by the RRC entity, the RLC entity; and
in a case of determining that the RLC entity is not to be reestablished in a case of the serving cell change,
not reestablishing, by the RRC entity, the RLC entity.

3. An integrated circuit implemented in a terminal apparatus for communicating with a base station apparatus, the integrated circuit causing an RRC entity of the terminal apparatus to perform:
in a case that a serving cell change to a candidate cell is indicated by a lower layer of a certain cell group,
determining, based on a configuration of the candidate cell stored in the RRC entity,
whether to reestablish an RLC entity in a case of the serving cell change;
in a case of determining that the RLC entity is to be reestablished in a case of the serving cell change,
reestablishing the RLC entity; and
in a case of determining that the RLC entity is not to be reestablished in a case of the serving cell change,
not reestablishing the RLC entity.
